# EUROPEAN PATENT APPLICATION

(11) **EP 3 072 996 A1**
(43) Date of publication of application: **28.09.2016**
(21) Application number: 14863424.9
(22) Date of filing: 26.02.2014
(51) Int. Cl.: D01D 5/00, D01D 4/00, D01D 13/00

(54) **ELECTROSPINNING DEVICE FOR MANUFACTURING NANOFIBER**

(30) Priority: 21.11.2013 KR 20130142274; 21.11.2013 KR 20130142275; 21.11.2013 KR 20130142276; 21.11.2013 KR 20130142277; 21.11.2013 KR 20130142281; 21.11.2013 KR 20130142282; 21.11.2013 KR 20130142283
(71) Applicant: Finetex Ene, Inc., Seoul 137-819 (KR)
(72) Inventor: PARK, Jong-Chul, Seoul 140-774 (KR)
(74) Representative: v. Bezold & Partner Patentanwälte - PartG mbB
(86) International application number: PCT/KR2014/001581
(87) International publication number: WO 2015/076459

(57) **Abstract**

The purpose of the present invention is to provide an electrospinning device for manufacturing a nanofiber, the device comprising multiple units arranged successively, wherein units for ejecting a hot melt and units for ejecting a polymer spinning solution are installed alternately, the hot melt is ejected onto a substrate from nozzle blocks of the hot melt units positioned on the front end, and the polymer spinning solution is electrically spun onto the substrate, to which the hot melt has been ejected, from nozzle blocks of the spinning solution units positioned on the rear end, thereby stacking a nanofiber web. Accordingly, the nanofiber web can be easily attached to the substrate; the device is applicable both to an upward electrospinning device and a downward electrospinning device; the holt melt is not only ejected separately from the polymer spinning solution but also is repeatedly ejected to specific areas and parts on the substrate, thereby substantially reducing use of the hot melt; interference of the hot melt with the nanofiber web is minimized concurrently with substantially reducing use of the hot melt, thereby improving the performance and quality of the nanofiber or the nanofiber filter; the hot melt can not only be ejected onto the substrate through each unit, but the same or different kinds of polymer spinning solutions can be electrically spun, thereby manufacturing various materials and kinds of nanofibers and nanofiber filters, and enabling mass production of nanofibers and nanofiber filters.

## Description

### Technical Field

The present invention relates to an electrospinning device, and more particularly an electrospinning device to eject a hot melt to a location and a region of the substrate which is transported from the nozzle block of the unit which is located at the front end of the unit among multiple units, and at the rear end by electrospinning a polymer spinning solution at the rear end of the unit when electrospinning the solution, the adhesive between a nanofiber web and a substrate is good.

### Background Art

Generally, a filter is a filtering medium which filters out foreign matter in fluid, and comprises a liquid filter and an air filter.

An air filter is used for prevention of defective high-tech products along with high-tech industry development. An air filter eliminates biologically harmful things such as dust in air, particles, bio particles such as virus and mold, bacteria, etc. An air filter is applied in various fields such as production of semiconductor, assembly of computing device, hospital, food processing plant, food and agriculture field, and also widely used in workplace generating a lot of dust, and thermoelectric power plant.

Gas turbine used in thermal power plant intakes purified air from outside, compresses it, injects compressed air with fuel to combustion burner, mixes them, combusts mixed air and fuel, obtains high temperature and high pressure combustion gas, injects the high temperature and high pressure combustion gas to vane of turbine, and attains rotatory power.

Since the gas turbine comprises very precise components, periodic planned preventive maintenance is performed, and wherein the air filter is used for pretreatment to purify air in the atmosphere which inflows to a compressor.

Here, when an air filter adopts air for combustion intaken to gas turbine, it stops from permeating foreign substances in atmosphere such as dust into a filter medium, and provides purified air.

However, particles with larger particle size form Filter Cake on the surface of the filter medium. Also, fine particles gradually accumulate in the filter medium, and block pores of the filter medium.

Eventually, when particles accumulate on the surface of filter medium, it increases pressure loss of a filter, and declines sustainability of a filter.

Meanwhile, conventional air filter provides static electricity to fiber-assembly comprising a filter medium, and measures efficiency according to the principle collecting by electrostatic force. However, the European standard for air filters, EN779, revised to eliminate efficiency of filter by static electricity effect in 2012 and revealed that conventional filter actual efficiency decreases by 20% or more.

In order to solve the problems stated above, various methods which apply to filter by producing nanosized fiber have been developed and used.

When applying nanofiber to filter, compared to conventional filter medium having large diameter, specific-surface area is very large, flexibility of surface functionality is good, having nanosized pores, and harmful fine particles are effectively eliminated.

However, manufacture of filter using nanofiber has problems such as increasing production cost, difficulty in adjusting various conditions for production, difficulty in mass-production, and filter using nanofiber could not be produced and distributed in relatively low unit cost.

Also, since conventional technology of spinning nanofiber is limited to small scale production line concentrating on laboratory, technology of dividing spinning section and spinning nanofiber as unit concept is required.

Meanwhile, conventional electrospinning device produces nanofiber by electrospinning polymer spinning solution on one side of a substrate provided from the outside and forming by lamination a nanofiber web. In other words, conventional electrospinning device comprises only a bottom-up electrospinning device or a top-down electrospinning device, and electrospinning spinning solution on lower side or upper side of a substrate provided to an electrospinning device, laminating forming nanofiber web, and produces nanofiber web.

As described above, the electrospinning device comprises a bottom-up electrospinning device or a top-down electrospinning device, electrospun spinning solution on upper side or lower side of a substrate which is provided from the outside and carried in predetermined direction, and produces nanofiber laminating formed nanofiber web or nanofiber filter.

However, the bottom-up electrospinning device or the top-down electrospinning device electrospins spinning solution only on upper side or lower side of a substrate, and laminates nanofiber web, and there is a problem such as it cannot laminate nanofiber web by electrospinning on both sides of a substrate.

That is, in case of forming laminated nanofiber web, there is a problem that nanofiber web cannot be adhesive with the substrate by differences in component between polymer spinning solution and a substrate when the substrate is transported.

Meanwhile, there is a laminating process to laminate a substrate and nanofiber web in nanofiber or nanofiber filter manufactured by the electrospinning device, but there is also a problem that nanofiber web laminated by electrospinning the polymer spinning solution in the substrate because of the differenced in component between polymer spinning solution and a substrate.

To solve the problem above, by mixing the polymer spinning solution and hot melt when supplying the polymer spinning solution to nozzle block of the electrospinning device, the solution to prevent separating nanofiber web from the substrate was proposed. However, there is also a problem to decrease the property and quality of nanofiber or nanofiber filter because hot melt is ejected even in the part of area where it is not necessary when electrospinning mixture of the polymer spinning solution and hot melt onto a substrate.

In addition, there is also another problem to decrease the property and quality of nanofiber web laminated onto substrate by electrospinning the polymer spinning solution when mixing and adding excessive amount of hot melt to the polymer spinning solution because of using a lot of hot melts.

### Disclosure

### Technical Problem

The present invention is contrived to solve the problems described above, the multiple unit of the electrospinning device installed in sequence, especially the unit spinning hot melt and the unit spinning the polymer spinning solution are alternately installed, and the hot melt is spun onto a substrate from nozzle block of hot melt unit positioned on the front end, and the polymer spinning polymer is spun onto a hot melt layer on the substrate and nanofiber formed from nozzle block of unit positioned on the rear end. By doing so, the object of the present invention is to provide an electrospinning device for producing electrospun nanofibers easily bonded to a substrate.

In addition, by spinning hot melt only both ends of longitudinal direction in the transported substrate from nozzle block where nozzle pipes having the longitudinal direction of several nozzles installed the both ends of the nozzle block, by repeatedly spinning hot melt along transverse direction which cross at right angles to longitudinal direction of a substrate in each nozzle pipes with controlling spinning speed and time, by spinning a small quantity of hot melt with Dot shape onto particular area of the substrate from nozzle installed in particular location of nozzle block or from particular nozzle controlled individually by each valve, by spinning hot melt on particular area or part of the substrate from nozzle pipe and nozzle located in particular location among several nozzle controlled by valve in installed in nozzle block in unit, by repeatedly spinning hot melt along the transverse direction which cross at right angles to longitudinal direction of a substrate with controlling spinning speed and time with installed several nozzle pipes which are spaced apart and installed several nozzles along longitudinal direction in nozzle block in unit, or by spinning hot melt onto particular part and area of a substrate from nozzle installed in particular part of nozzle block in unit, the electrospinning for manufacturing nanofiber is provided to prevent separating nanofiber web from a substrate.

And, the electrospinning device of the present invention is applicable to bottom-up electrospinning devices and top-down electrospinning devices, and by spinning hot melt separately from polymer spinning solution and spinning it to particular area or part of the substrate, usage of hot melt can lessen, and property and quality of nanofiber or nanofiber filter can be improved by minimizing interference of hot melt to nanofiber web, and various kinds of nanofiber and nanofiber filter can be manufactured by spinning hot melt onto a substrate in each unit and by electrospinning same or different kind of polymer spinning solution. And the electrospinning device for mass manufacturing for nanofiber and nanofiber filter can be provided.

### Technical Solution

In order to achieve the objects of the present invention, according to a preferred embodiment of the present invention, an electrospinning device for production of nanofiber includes a hot melt unit comprising a spinning solution main tank which is provided one or more hot melt and nozzle block, which is installed inside case to spin hot melt from main tank, for spinning hot melt onto a substrate which provided from outside of unit; a spinning solution unit comprising a spinning solution main tank which is provided one of more polymer spinning solution, a nozzle block, which is installed inside case to spin the polymer spinning solution from main tank, where several nozzle pipes installed, wherein the nozzle pipes contain pin shaped nozzles along the longitudinal direction for spinning the polymer spinning solution onto a substrate from outside of unit; a collector separated in predetermined space from a nozzle for integrating hot melt and polymer spinning solution jetted from nozzle of nozzle block; a voltage generator generating voltage to a collector; and an auxiliary carry device for carrying a substrate; wherein the hot melt unit and the spinning solution unit alternatively installed at least one or more.

Here, an embodiment of the present invention further comprising: a spinning solution recovery path for retrieving overflowed polymer spinning solution from a nozzle block of each unit, a recycled tank connected to a spinning solution recovery path and stores retrieved polymer spinning solution, a middle tank connected to a recycled tank and a spinning solution main tank with a feed pipe and carries polymer spinning solution, and an overflow device which provides polymer spinning solution from a middle tank to a nozzle block through a supply pipe.

Alternatively, an embodiment of the present invention further comprising: a condensation device for condensing and liquefying VOC generated from each unit, a distillation device which distills and liquefies VOC condensed and liquefied through a condensation device, a storage device for storing solvent liquefied from a distillation device, and a VOC recycling device for reusing and recycling solvent in a storage tank which classifies and stores VOC liquefied and distilled from a distillation device as polymer spinning solution.

Meanwhile, top of a case comprises an electric insulator and the bottom comprises electric conductor, and top and bottom of a case are mutually combined.

Also, an embodiment of the present invention further comprises a thickness measuring device which is installed in rear-end of each unit, measures thickness of nanofiber web jetted on a substrate carried by ultrasonic waves, adjusts feed speed of a substrate and voltage intensity of a voltage generator according to thickness of measured nanofiber web, and adjusts thickness of nanofiber web.

Meanwhile, an embodiment of the present invention further comprises a permeability measuring device which is provided in the lowermost among each unit, measures permeability of nanofiber web jetted on a substrate by ultrasonic waves, adjusts feed speed of a substrate and voltage intensity of a voltage generator according to permeability of measured nanofiber web, and adjusts permeability of nanofiber web.

In addition, an embodiment of the present invention further comprises a buffer section formed between hot melt unit and polymer solution unit, a pair of support roller supporting substrate on a buffer section, one or more adjusting roller wound substrate and installed movable up and down between a pair of support roller, and a substrate feed speed adjusting device which adjusts feed speed of a substrate according to vertical motion of each adjusting roller.

Moreover, an embodiment of the present invention further comprises a temperature adjusting control device which is formed in spiral form to inner peripheral edge of each pipe of a nozzle block, formed in heating line form, and adjusts temperature of hot melt and polymer spinning solution provided to a pipe.

Here, several nozzle pipes are arranged and installed along longitudinal direction of pin form nozzle in nozzle block in the hot melt unit, and hot melt is ejected only to both ends of the width direction of the substrate.

And after spinning hot melt from nozzle installed nozzle pipes in hot melt unit and providing the substrate with hot melt to spinning solution unit, the polymer spinning solution from nozzle installed in nozzle pipe of spinning solution unit is electrospun, and the process to laminate nanofiber web onto a substrate happens alternately and repeatedly.

Meanwhile, nozzle pipe comprising pin-form and arranged several nozzles along longitudinal direction on nozzle block in hot melt unit are installed, and the nozzle pipes are installed at both ends of nozzle block, so hot melt is spun along transverse direction which cross at right angles to longitudinal direction of a substrate. And the hot melt is spun repeatedly on particular part of a substrate which is spaced at regular intervals like interval between nozzle pipes.

Here, nozzle pipes containing pin-form and arranged several nozzles along longitudinal direction on nozzle block in hot melt unit are installed with space at regular intervals, and hot melt from the several nozzle pipes which is spaced at regular intervals is spun along transverse direction which cross at right angles to longitudinal direction of a substrate, and it is spun on the particular area of the substrate which is spaced at regular intervals like interval between nozzle pipes.

Meanwhile, several nozzles controlled individually as a pin form in nozzle block in hot melt unit are installed, supply pipes are installed to supply hot melt in the main tank to each controlled nozzle, and valves are installed in each supply pipe to control open and shut individually.

Also, pin form nozzles in nozzle block of hot unit are arranged and installed in particular location, nozzles installed in particular location of nozzle block are installed on each edge and center part of nozzle block to spin hot melt onto particular area of a transported substrate.

Here, hot melt is spun in Dot form from nozzle installed in nozzle block of hot melt unit, and after supplying a substrate with Dot form hot melt spun to the spinning solution unit positioned on the rear end, the polymer spinning solution from several nozzles installed nozzle block of spinning solution unit is electrospun and nanofiber web is formed and laminated on the substrate, and the process above happens alternatively and repeatedly.

Meanwhile, multiple nozzle pipes in nozzle block of hot melt unit are installed to be enable it controlled, and pin form nozzles in nozzle pipe are installed along longitudinal direction and controlled individually. In nozzle pipes arranged and installed in nozzle block, the supply pipes for supplying hot melt from main tank are installed, and at each supply pipe, valve is installed to control open and shut individually, and the valve is connected to supply pipes and operated for controlling open and shut individually.

Here, among the nozzle pipes installed nozzle block of hot melt unit or particular nozzles installed in the nozzle pipes, hot melt is ejected, and the hot melt is spun onto particular realm and part of a substrate, and the substrate is transported to spinning solution unit positioned on the rear end, and from each nozzle installed nozzle block of spinning solution unit, polymer spinning solution is electrospun and nanofiber web is laminated. And the process above happens alternatively and repeatedly.

And, pin form nozzles are installed in particular realm of nozzle block of hot melt unit, the nozzles installed at each edge and the center part of the nozzle block, and hot melt is spun on the edges and center of the substrate.

Meanwhile, from the nozzles installed in particular realm of nozzle block of hot melt unit, hot melt is spun in particular area and partial section of nozzle block, and a substrate with particularly spun hot melt is supplied to spinning solution unit positioned on the rear end. After that, from each nozzles of nozzle pipes installed in nozzle block of spinning solution unit, polymer spinning solution is electrospun and nanofiber web is formed and laminated. And the process above happens alternatively and repeatedly.

### Advantageous Effects

The present invention having the composition as described above, by spinning hot melt from nozzle block in unit positioned on the front end among multiple units of the electrospinning device, by spinning polymer spinning solution from nozzle block in unit positioned on the rear end, and by spinning hot melt and polymer spinning solution alternatively, nanofiber web is easily bonded onto a substrate, so it prevents separating nanofiber from the substrate.

Also, by spinning hot melt only both ends of longitudinal direction in the transported substrate from nozzle block where nozzle pipes having the longitudinal direction of several nozzles installed the both ends of the nozzle block, by repeatedly spinning hot melt along transverse direction which cross at right angles to longitudinal direction of a substrate in each nozzle pipes with controlling spinning speed and time, by spinning a small quantity of hot melt with Dot shape onto particular area of the substrate from nozzle installed in particular location of nozzle block or from particular nozzle controlled individually by each valve, by spinning hot melt on particular area or part of the substrate from nozzle pipe and nozzle located in particular location among several nozzle controlled by valve in installed in nozzle block in unit, by repeatedly spinning hot melt along the transverse direction which cross at right angles to longitudinal direction of a substrate with controlling spinning speed and time with installed several nozzle pipes which are spaced apart and installed several nozzles along longitudinal direction in nozzle block in unit, or by spinning hot melt onto particular part and area of a substrate from nozzle installed in particular part of nozzle block in unit, the electrospinning for manufacturing nanofiber is provided to prevent separating nanofiber web from a substrate.

And, the electrospinning device of the present invention is applicable to bottom-up electrospinning devices and top-down electrospinning devices, and by spinning hot melt separately from polymer spinning solution and spinning it to particular area or part of the substrate, usage of hot melt can lessen, and property and quality of nanofiber and nanofiber filter can be improved by minimizing interference of hot melt to nanofiber web, and various kinds of nanofiber and nanofiber filter can be manufactured by spinning hot melt onto a substrate in each unit and by electrospinning same or different kind of polymer spinning solution. And the electrospinning device for mass manufacturing for nanofiber and nanofiber filter can be provided.

### Brief Description of the Drawings

FIG. 1 schematically depicts a side view of an electrospinning device according to an exemplary embodiment of the present invention.
FIG. 2 schematically depicts a perspective view of a nozzle block spinning hot melt installed in each hot melt unit according to an embodiment 1 of the present invention.
FIG. 3 schematically depicts a ground plan of a nozzle block spinning hot melt installed in each hot melt unit according to an embodiment 1 of the present invention.
FIG. 4 schematically depicts a ground plan of a nozzle block spinning polymer spinning solution installed in each spinning solution unit according to an embodiment 1 of the present invention.
FIG. 5 schematically illustrates a front end view of a heat transfer device in a nozzle block installed in each unit of the electrospinning device according to an embodiment of the present invention.
FIG. 6 is a cross-sectional view of A-A' line according to an embodiment of the present invention.
FIG. 7 schematically shows an auxiliary carry device of the electrospinning device according to an embodiment of the present invention.
FIG. 8 schematically shows an auxiliary belt roller of an auxiliary carry device of the electrospinning device according to another embodiment of the present invention.
FIG. 9 to FIG. 10 schematically illustrate a ground plan of spinning operation process to electrospin hot melt and polymer spinning solution in order from nozzle block installed in each unit of the electrospinning device of the present invention according to an embodiment 1.
FIG. 11 to FIG 14 schematically illustrate a side view of operation process of a substrate feed speed adjusting device of the electrospinning device of the present invention.
FIG. 15 schematically depicts a perspective view of a nozzle block spinning hot melt installed in each hot melt unit according to an embodiment 2 of the present invention.
FIG. 16 schematically depicts a ground plan of a nozzle block spinning hot melt installed in each hot melt unit according to an embodiment 2 of the present invention.
FIG. 17 to FIG. 18 schematically illustrate a ground plan of spinning operation process to electrospin hot melt and polymer spinning solution in order from nozzle block installed in each unit of the electrospinning device of the present invention according to an embodiment 2.
FIG. 19 schematically depicts a perspective view of a nozzle block spinning hot melt installed in each hot melt unit according to an embodiment 3 of the present invention.
FIG. 20 schematically depicts a ground plan of a nozzle block spinning hot melt installed in each hot melt unit according to an embodiment 3 of the present invention.
FIG. 21 schematically depicts a ground plan of a nozzle block spinning hot melt installed in each hot melt unit according to an another embodiment of the present invention.
FIG. 22 to FIG. 23 schematically illustrate a ground plan of spinning operation process to electrospin hot melt and polymer spinning solution in order from nozzle block installed in each unit of the electrospinning device of the present invention according to an embodiment 3.
FIG. 24 schematically depicts a perspective view of a nozzle block spinning hot melt installed in each hot melt unit according to an embodiment 4 of the present invention.
FIG. 25 schematically depicts a ground plan of a nozzle block spinning hot melt installed in each hot melt unit according to an embodiment 4 of the present invention.
FIG. 26 to FIG. 27 schematically illustrate a ground plan of spinning operation process to electrospin hot melt and polymer spinning solution in order from nozzle block installed in each unit of the electrospinning device of the present invention according to an embodiment 4.
FIG. 28 schematically depicts a perspective view of a nozzle block spinning hot melt installed in each hot melt unit according to an embodiment 5 of the present invention.
FIG. 29 schematically depicts a ground plan of a nozzle block spinning hot melt installed in each hot melt unit according to an embodiment 5 of the present invention.
FIG. 30 to FIG. 31 schematically illustrate a ground plan of spinning operation process to electrospin hot melt and polymer spinning solution in order from nozzle block installed in each unit of the electrospinning device of the present invention according to an embodiment 5.
FIG. 32 schematically depicts a perspective view of a nozzle block spinning hot melt installed in each hot melt unit according to an embodiment 6 of the present invention.
FIG. 33 schematically depicts a ground plan of a nozzle block spinning hot melt installed in each hot melt unit according to an embodiment 6 of the present invention.
FIG. 34 to FIG. 35 schematically illustrate a ground plan of spinning operation process to electrospin hot melt and polymer spinning solution in order from nozzle block installed in each unit of the electrospinning device of the present invention according to an embodiment 6.
FIG. 36 schematically depicts a perspective view of a nozzle block spinning hot melt installed in each hot melt unit according to an embodiment 7 of the present invention.
FIG. 37 schematically depicts a ground plan of a nozzle block spinning hot melt installed in each hot melt unit according to an embodiment 7 of the present invention.
FIG. 38 and FIG. 39 schematically illustrate a ground plan of spinning operation process to electrospin hot melt and polymer spinning solution in order from nozzle block installed in each unit of the electrospinning device of the present invention according to an embodiment 7.

### Description of Reference Numbers of Drawings

- 1:: electrospinning device,
- 3:: supply roller,
- 5:: winding roller,
- 7:: main control device,
- 8:: spinning solution main tank,
- 10a, 10c:: hot melt unit,
- 10b, 10d:: spinning solution unit,
- 11, 11a, 11b:: nozzle block,
- 12:: nozzle,
- 13:: collector,
- 14, 14a, 14b, 14c, 14d:: voltage generator,
- 15, 15a, 15b:: substrate,
- 16:: auxiliary carry device,
- 16a:: auxiliary belt,
- 16b:: auxiliary belt roller,
- 18:: case,
- 19:: insulation member,
- 21, 25:: supply pipe,
- 23, 27:: valve,
- 30:: substrate feed speed adjusting device,
- 31:: buffer section,
- 33, 33':: support roller,
- 35:: adjusting roller,
- 40:: nozzle pipe,
- 41:: heating line,
- 60:: temperature adjusting control device,
- 70:: thickness measuring device,
- 80:: permeability measuring device,
- 90:: laminating device,
- 200:: overflow device,
- 211, 231:: agitation device,
- 212, 213, 214, 233:: valve,
- 216:: second feed pipe,
- 218:: second feed control device,
- 220:: middle tank,
- 222:: second sensor,
- 230:: recycled tank,
- 232:: first sensor,
- 240:: supply pipe,
- 242:: supply control valve,
- 250:: spinning solution recovery path,
- 251:: first feed pipe,
- 300:: VOC recycling device,
- 310:: condensation device,
- 311, 321, 331, 332:: pipe,
- 320:: distillation device,
- 330:: solvent storage device,

### Detailed Description of the Preferred Embodiments

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

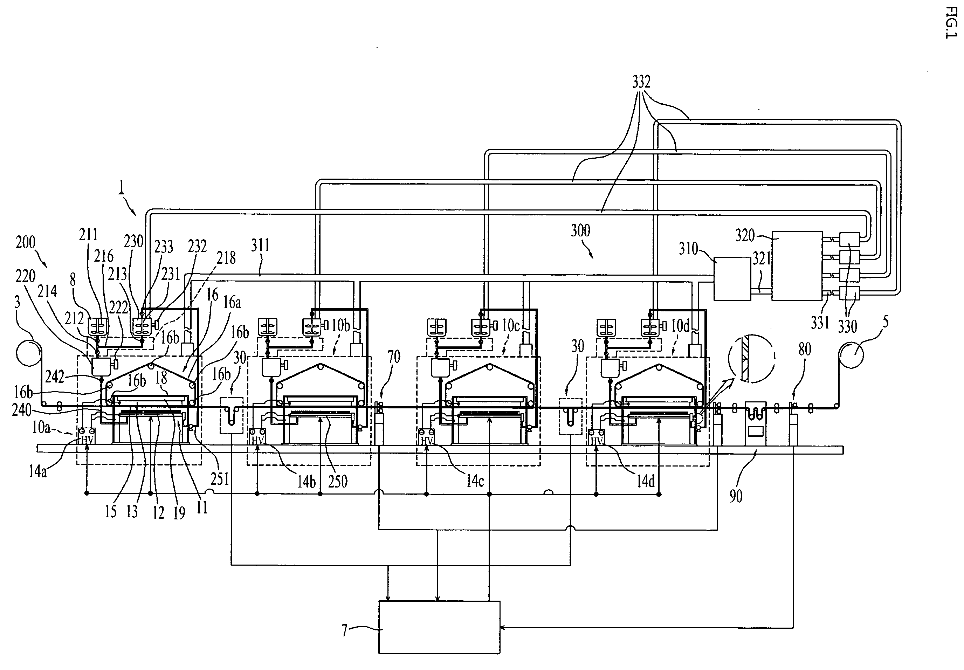

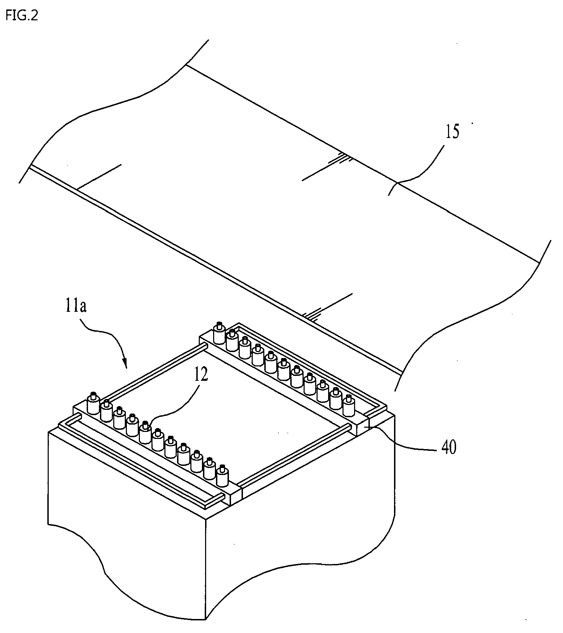

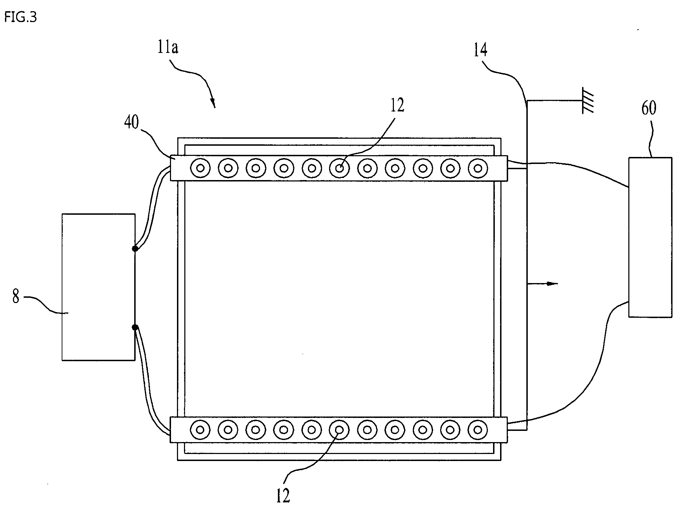

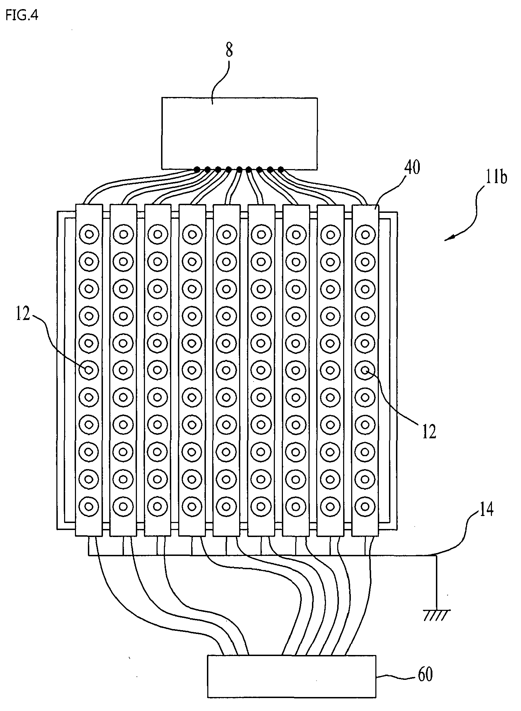

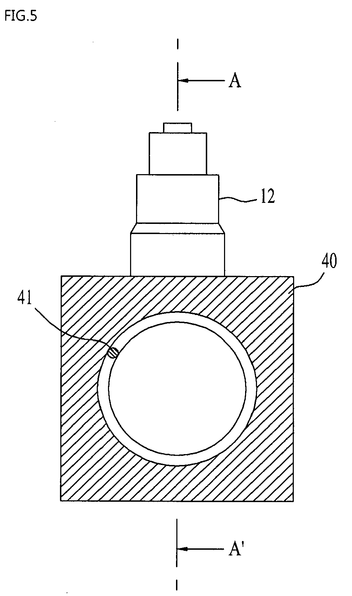

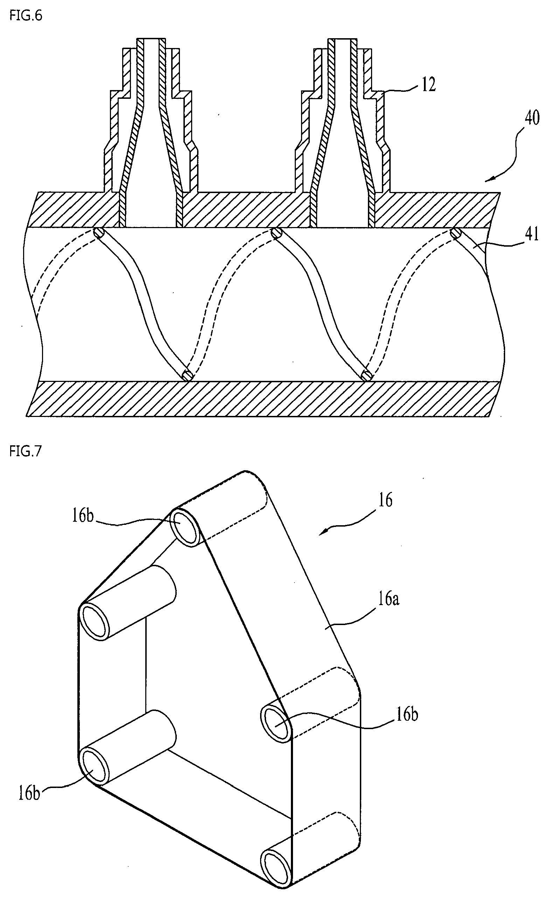

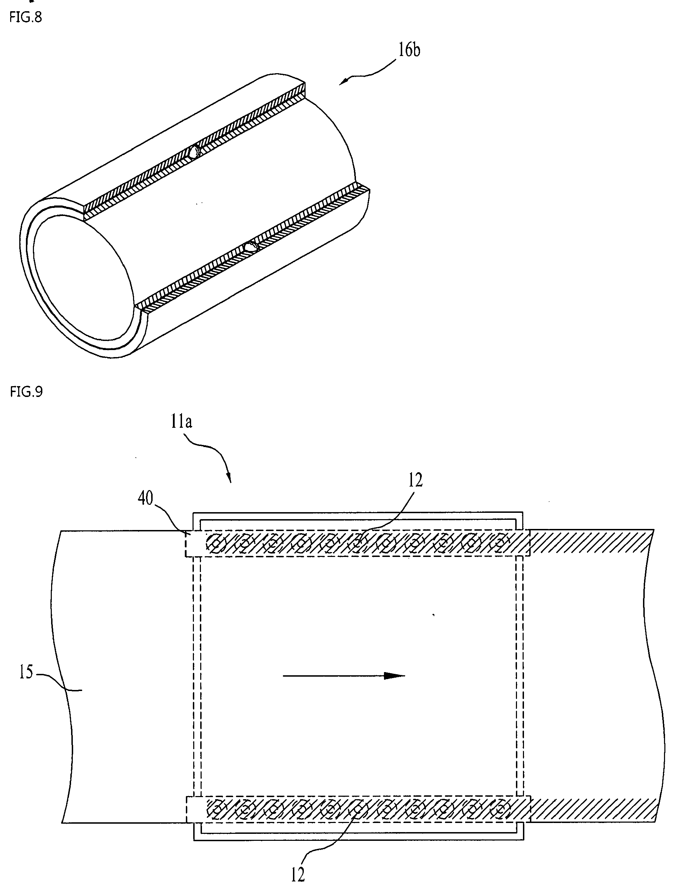

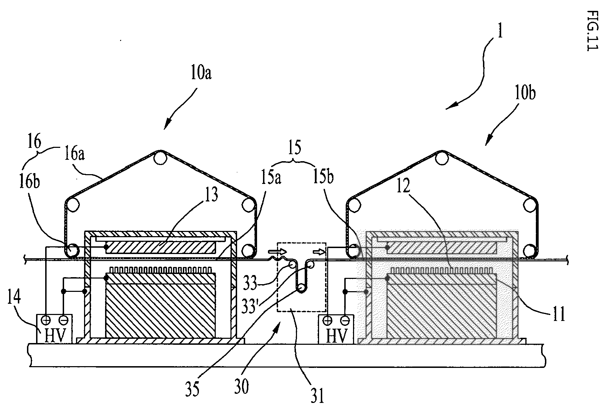

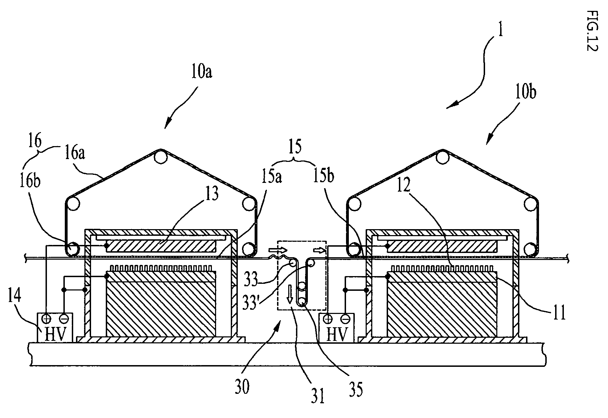

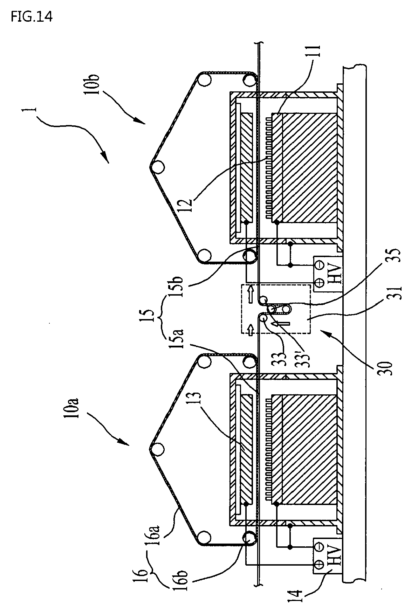

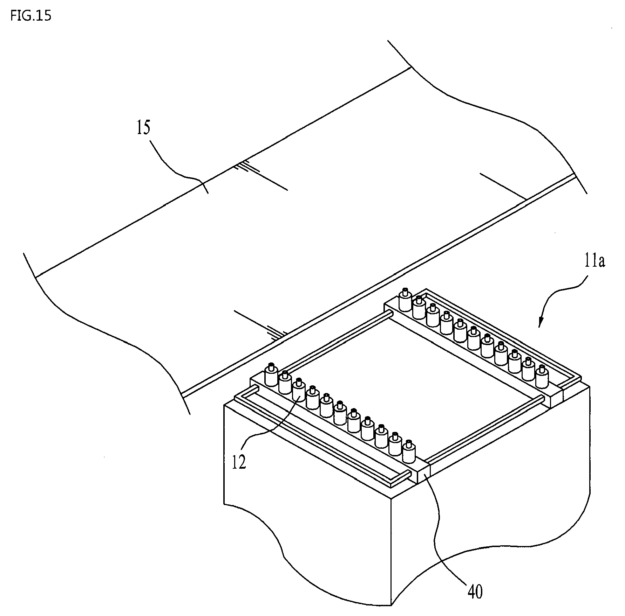

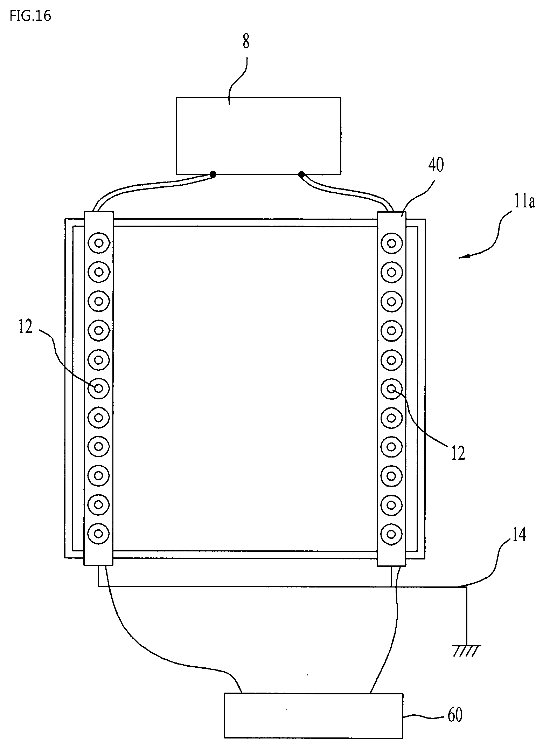

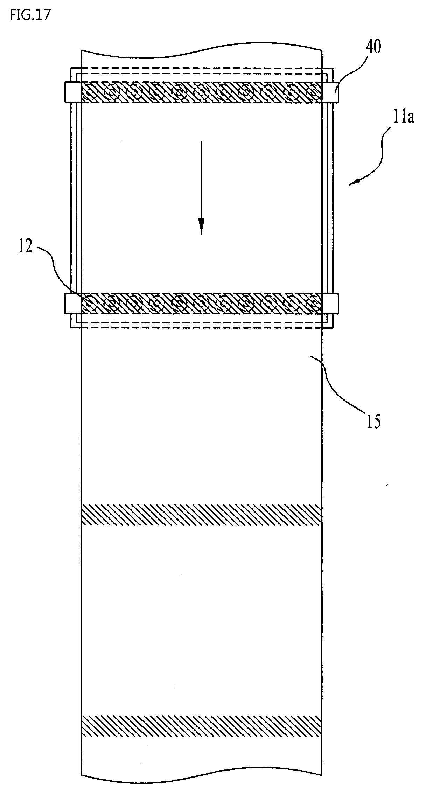

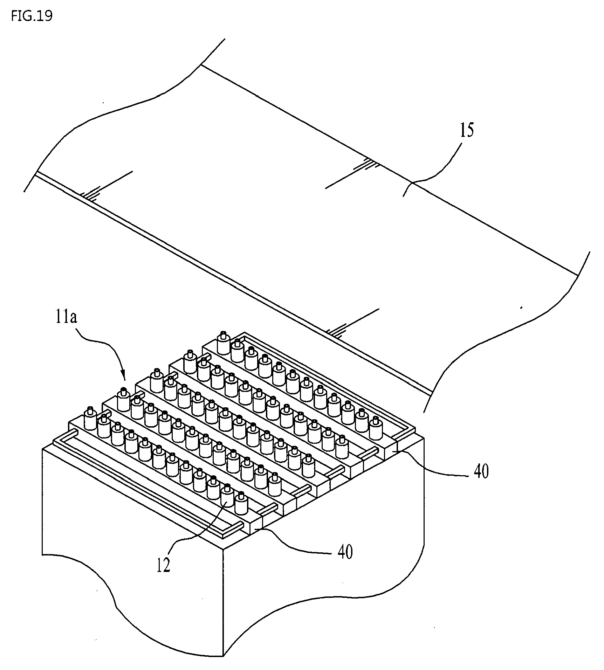

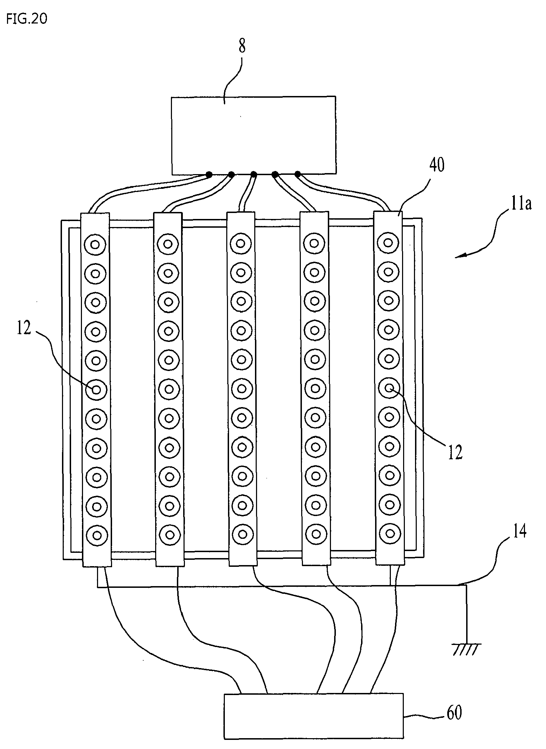

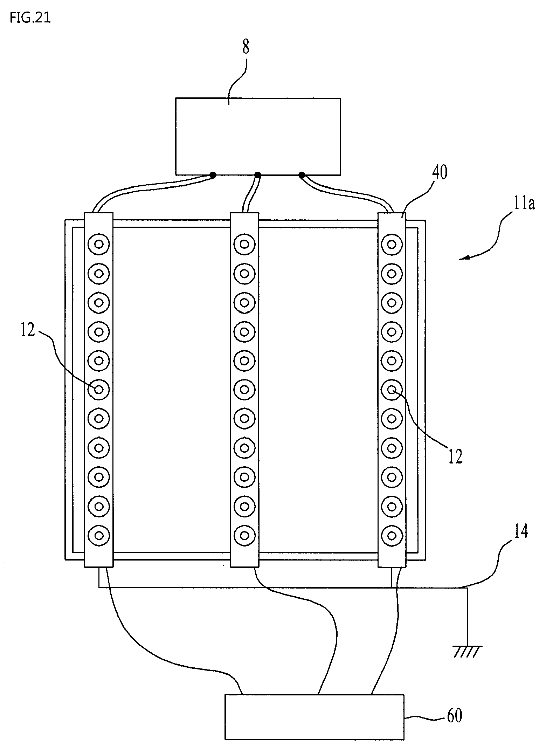

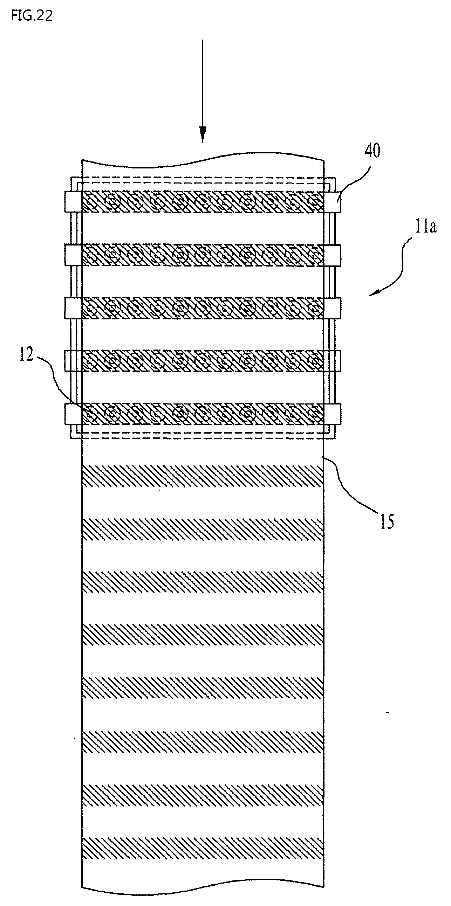

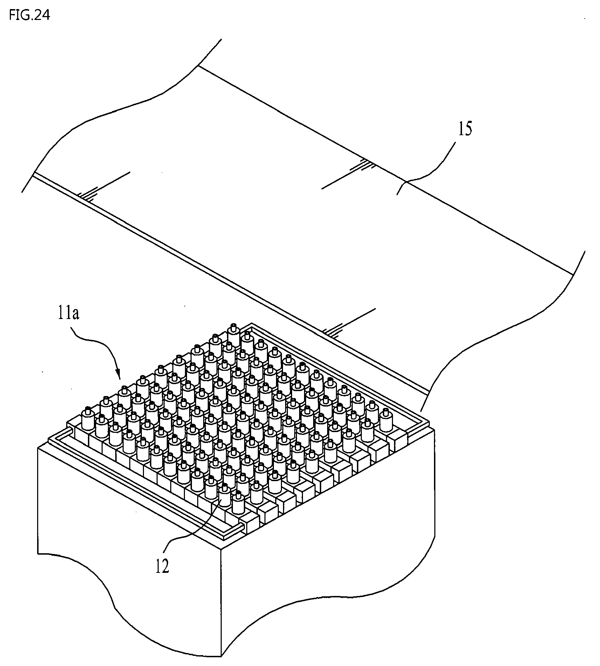

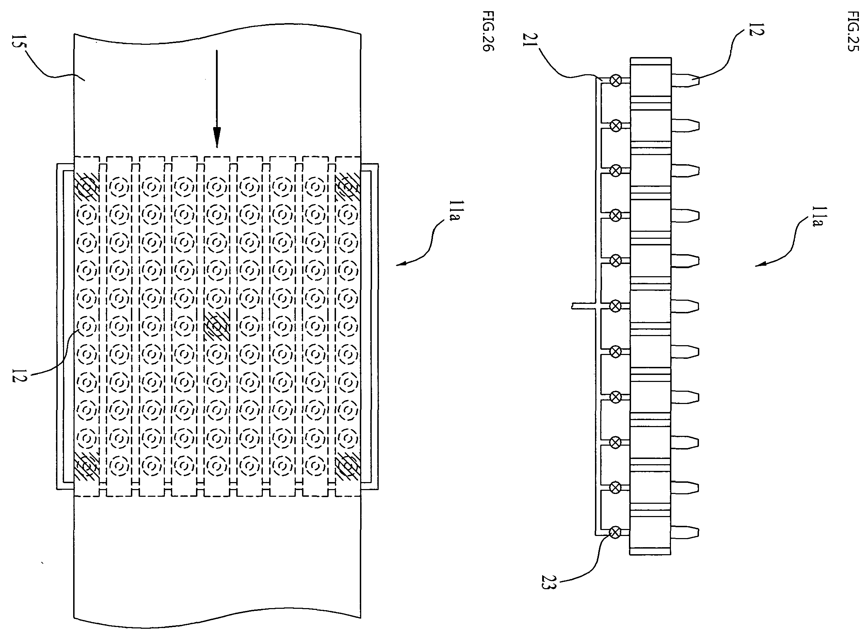

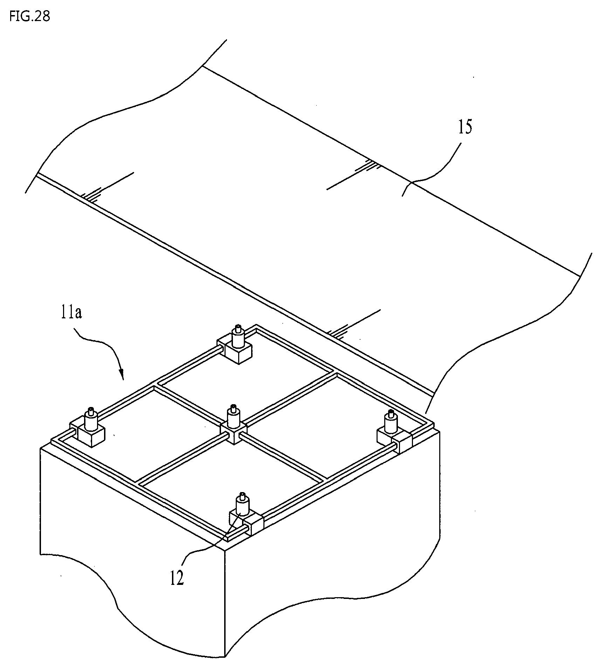

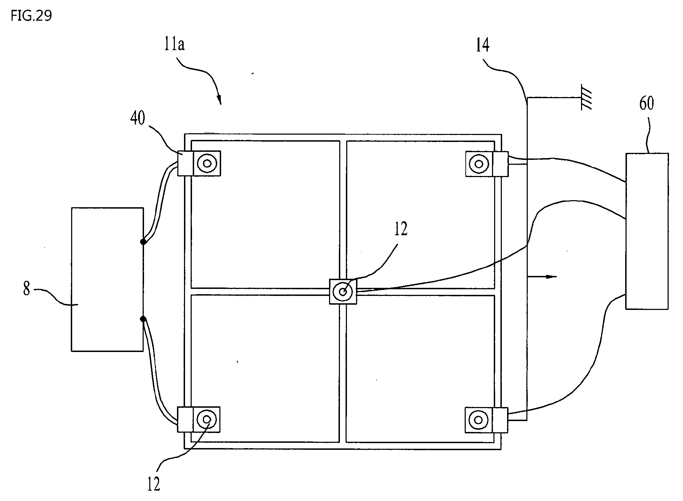

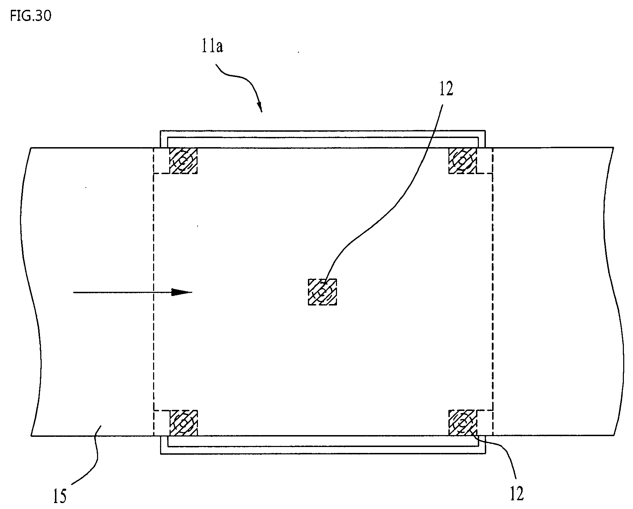

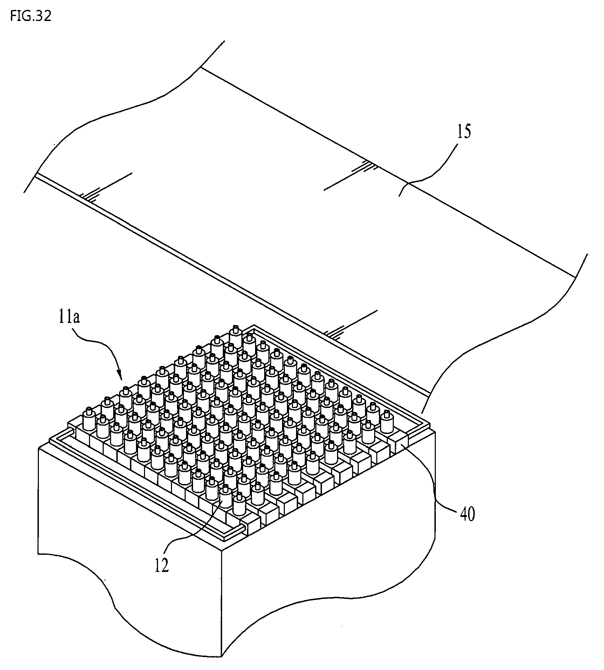

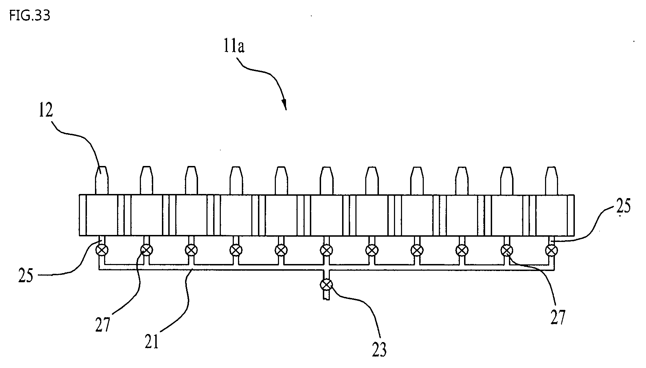

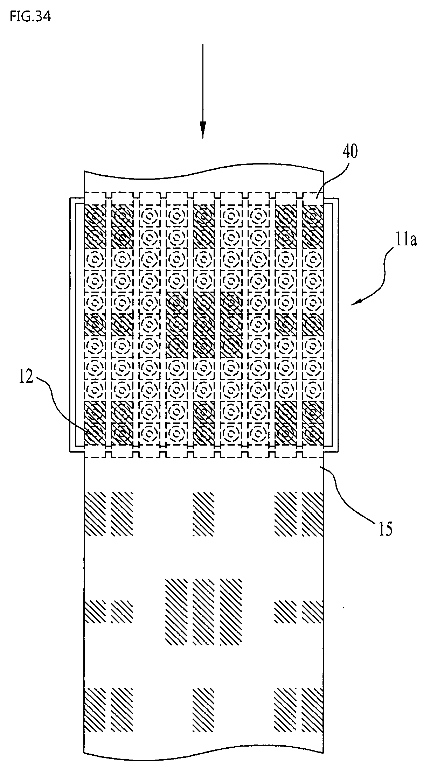

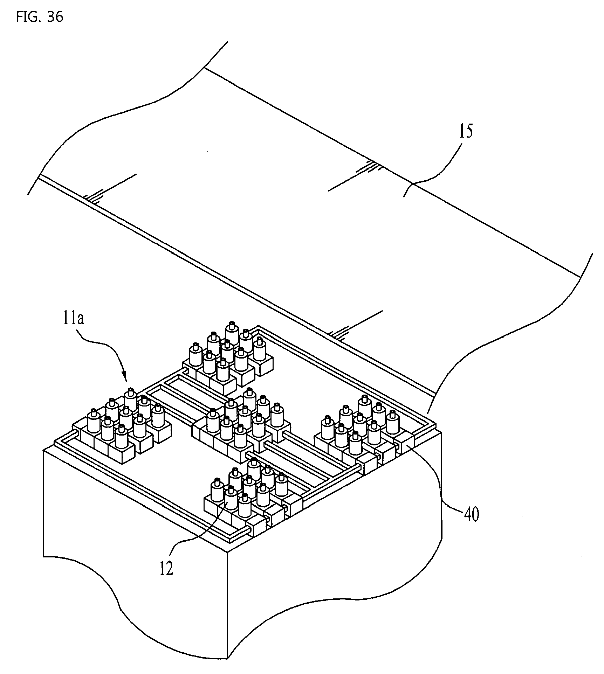

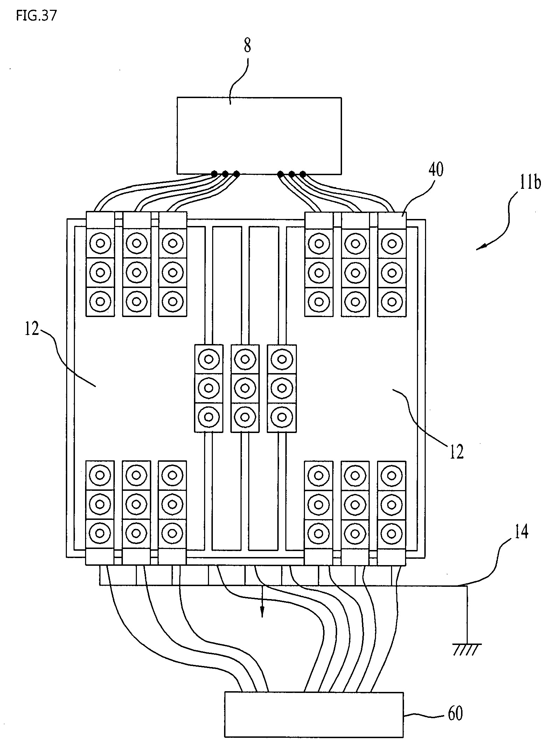

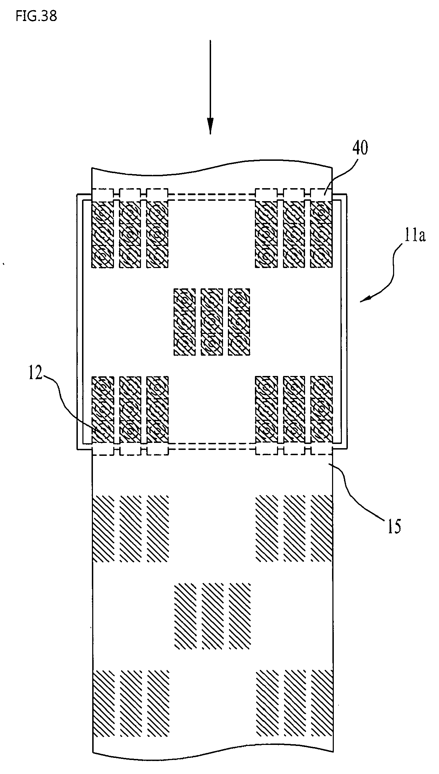

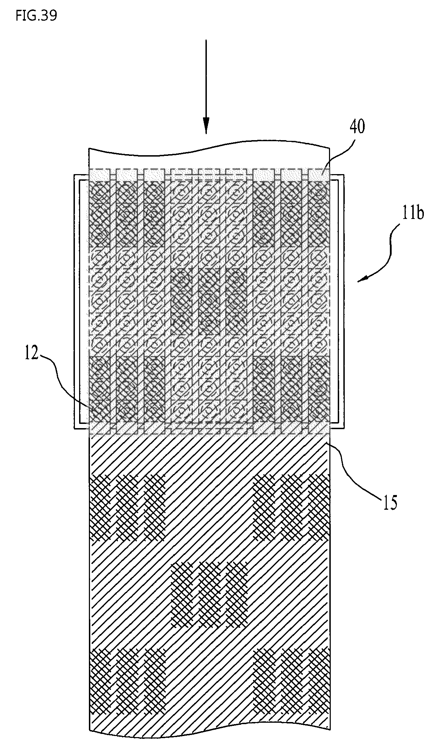

FIG. 1 schematically depicts a side view of an electrospinning device according to an exemplary embodiment of the present invention, FIG. 2 schematically depicts a perspective view of a nozzle block spinning hot melt installed in each hot melt unit according to an embodiment 1 of the present invention, FIG. 3 schematically depicts a ground plan of a nozzle block spinning hot melt installed in each hot melt unit according to an embodiment 1 of the present invention, FIG. 4 schematically depicts a ground plan of a nozzle block spinning polymer spinning solution installed in each spinning solution unit according to an embodiment 1 of the present invention, FIG. 5 schematically illustrates a front end view of a heat transfer device in a nozzle block installed in each unit of the electrospinning device according to an embodiment of the present invention, FIG. 6 is a cross-sectional view of A-A' line according to an embodiment of the present invention, FIG. 7 schematically shows an auxiliary carry device of the electrospinning device according to an embodiment of the present invention, FIG. 8 schematically shows an auxiliary belt roller of an auxiliary carry device of the electrospinning device according to another embodiment of the present invention, FIG. 9 to FIG. 10 schematically illustrate a ground plan of spinning operation process to electrospin hot melt and polymer spinning solution in order from nozzle block installed in each unit of the electrospinning device of the present invention according to an embodiment 1, FIG. 11 to FIG 14 schematically illustrate a side view of operation process of a substrate feed speed adjusting device of the electrospinning device of the present invention, FIG. 15 schematically depicts a perspective view of a nozzle block spinning hot melt installed in each hot melt unit according to an embodiment 2 of the present invention, FIG. 16 schematically depicts a ground plan of a nozzle block spinning hot melt installed in each hot melt unit according to an embodiment 2 of the present invention, FIG. 17 to FIG. 18 schematically illustrate a ground plan of spinning operation process to electrospin hot melt and polymer spinning solution in order from nozzle block installed in each unit of the electrospinning device of the present invention according to an embodiment 2, FIG. 19 schematically depicts a perspective view of a nozzle block spinning hot melt installed in each hot melt unit according to an embodiment 3 of the present invention, FIG. 20 schematically depicts a ground plan of a nozzle block spinning hot melt installed in each hot melt unit according to an embodiment 3 of the present invention, FIG. 21 schematically depicts a ground plan of a nozzle block spinning hot melt installed in each hot melt unit according to an another embodiment of the present invention, FIG. 22 to FIG. 23 schematically illustrate a ground plan of spinning operation process to electrospin hot melt and polymer spinning solution in order from nozzle block installed in each unit of the electrospinning device of the present invention according to an embodiment 3, FIG. 24 schematically depicts a perspective view of a nozzle block spinning hot melt installed in each hot melt unit according to an embodiment 4 of the present invention, FIG. 25 schematically depicts a ground plan of a nozzle block spinning hot melt installed in each hot melt unit according to an embodiment 4 of the present invention, FIG. 26 to FIG. 27 schematically illustrate a ground plan of spinning operation process to electrospin hot melt and polymer spinning solution in order from nozzle block installed in each unit of the electrospinning device of the present invention according to an embodiment 4, FIG. 28 schematically depicts a perspective view of a nozzle block spinning hot melt installed in each hot melt unit according to an embodiment 5 of the present invention, FIG. 29 schematically depicts a ground plan of a nozzle block spinning hot melt installed in each hot melt unit according to an embodiment 5 of the present invention, FIG. 30 to FIG. 31 schematically illustrate a ground plan of spinning operation process to electrospin hot melt and polymer spinning solution in order from nozzle block installed in each unit of the electrospinning device of the present invention according to an embodiment 5, FIG. 32 schematically depicts a perspective view of a nozzle block spinning hot melt installed in each hot melt unit according to an embodiment 6 of the present invention, FIG. 33 schematically depicts a ground plan of a nozzle block spinning hot melt installed in each hot melt unit according to an embodiment 6 of the present invention, FIG. 34 to FIG. 35 schematically illustrate a ground plan of spinning operation process to electrospin hot melt and polymer spinning solution in order from nozzle block installed in each unit of the electrospinning device of the present invention according to an embodiment 6, FIG. 36 schematically depicts a perspective view of a nozzle block spinning hot melt installed in each hot melt unit according to an embodiment 7 of the present invention, FIG. 37 schematically depicts a ground plan of a nozzle block spinning hot melt installed in each hot melt unit according to an embodiment 7 of the present invention, and FIG. 38 to FIG. 39 schematically illustrate a ground plan of spinning operation process to electrospin hot melt and polymer spinning solution in order from nozzle block installed in each unit of the electrospinning device of the present invention according to an embodiment 7.

As illustrated in the drawings, the electrospinning device(1) according to the present invention comprises a bottom-up electrpspinning device(1), consecutively provided at least one or more units(10a, 10b, 10c, 10d) separated in predetermined space, each of the unit(10a, 10b, 10c, 10d) individually electrospinning the same matter of polymer spinning solution, or individually electrospinning polymer spinning solution with different material, and produces filter material such as nanofiber or nanofiber filter.

According to the present invention, the electrospinning device(1) comprises a bottom-up electrospinning device, and it can comprises a top-down electrospinning device(not shown).

Moreover, according to the present invention, 4 units(10a, 10b, 10c, 10d) of the electrospinning device(1) are provided, number of the units(10a, 10b, 10c, 10d) is preferably provided 2 or more, and it is not limited thereto.

Here, in each unit(10a, 10b, 10c, 10d) of the electrospinning device(1) comprises a spinning solution main tank(8) filling polymer spinning solution or hot melt inside, a metering pump(not shown) for quantitatively providing polymer spinning solution or hot melt filled in the spinning solution main tank(8), a nozzle block which arranged and installed a plurality of nozzle pipe(40) provided a plurality of nozzle(12) which comprising in pin form and jetting polymer spinning solution filled in the spinning solution main tank(8), a collector(13) separated in predetermined space form a nozzle(12) to collect polymer spinning solution sprayed from the nozzle(12), and a voltage generator(14a, 14b, 14c, 14d) generating voltage to the collector(13).

According to the structure as described above, the electrospinning device(1) according to the present invention quantatively provides polymer spinning solution or hot melt filled in a spinning solution main tank(8) to a plurality of nozzle(12) formed in a nozzle block(11) through a metering pump, and provided polymer spinning solution or hot melt is jetted and line-focused on a collector flowing high voltage through a nozzle(12), a nanofiber web laminating formed on a substrate(15) moved from on a collector(13), and produces nanofiber or a nanofiber filter.

For this, each unit(10a, 10b, 10c, 10d) of the electrospinning device(1) comprises hot melt unit(10a, 10c) and spinning solution unit(10b, 10d), wherein from nozzle block in the hot melt unit(10a, 10c) positioned on the front end, hot melt is spun, and from nozzle block in the spinning solution unit(10b, 10d) positioned on the rear end, polymer spinning solution is electrospun. The hot melt unit(10a, 10c) and spinning solution unit(10b, 10d) are alternatively installed, so hot melt and polymer spinning solution are alternatively electrospun onto a substrate(15).

Moreover, among nozzle blocks(11) installed in the each unit(10a, 10b, 10c, 10d), nozzle block(11a) in hot melt unit(10a, 10c) is connected to spinning solution main tank(8) filled with hot melt, and nozzle block(11b) in spinning solution unit(10b, 10d) is connected to spinning solution main tank(8) filled with polymer spinning solution.

In the present invention, each nozzle block(11) installed in each unit(10a, 10b, 10c, 10d) is individually connected to corresponding each spinning solution main tank(8) for providing hot melt or polymer spinning solution. However, it is capable that among each unit(10a, 10b, 10c, 10d), hot melt units(10a, 10c) are connected to one spinning solution main tank filled with hot melt, spinning solution units(10b, 10d) are connected to one spinning solution main tank filled with polymer spinning solution.

Here, among nozzle block(11) installed in each unit(10a, 10b, 10c, 10d) according to embodiment 1 of the present invention, nozzle block(11a) installed in hot melt unit(10a, 10c) comprise nozzle pipe(40), which has multiple nozzle(12) along longitudinal direction, arranged and installed on both edge of the nozzle block(11a), and hot melt from nozzles (12) in the nozzle pipe(40) arranged and installed on both edge of the nozzle block(11a) is spun onto both edge to width direction of transported substrate(15).

In other words, nozzle block(11b), which is installed in spinning solution unit(10b, 10d) among each unit(10a, 10b, 10c, 10d) to electrospin polymer spinning solution onto a substrate(15), has nozzle pipe(40) containing multiple nozzle(12) along longitudinal direction. While, in nozzle block(11a), which is installed in hot melt unit(10a, 10c) to electrospin hot melt onto a substrate, nozzle pipe(40) having multiple nozzle(12) is installed on both edge of the nozzle block(11a) along longitudinal direction.

According to embodiment 1 of the present invention, among nozzle block(11) installed in each unit (10a, 10b, 10c, 10d), the number and arrangement of nozzle pipe(40) from nozzle block(11a) installed in hot melt unit(10a, 10c) and nozzle block(11b) installed in spinning solution unit(10b, 10d) are different each other, but it is possible to make the same structure and arrangement of nozzle pipe(40) from nozzle block(11a) installed in hot melt unit(10a, 10c) and nozzle block(11b) installed in spinning solution unit(10b, 10d).

At this time, among nozzle pipe(40) from nozzle block(11a) installed in hot melt unit(10a, 10c), only from nozzle (12) of nozzle pipe(40) installed at both edge of the nozzle block, it is possible to spin hot melt onto both edge to width direction of substrate.

In case that nozzle pipes(40) from nozzle block(11a) spinning hot melt and nozzle block(11b) spinning polymer spinning solution have the same structure and arrangement, the nozzle pipe(40) in nozzle block(11a) spinning hot melt preferably can be controlled individually due to valve(not shown), and the nozzle pipe(40) in nozzle block(11b) spinning polymer spinning solution also preferably can be controlled individually due to valve(not shown).

Because of this, by individually controlling each nozzle pipe(40) of nozzle block(11) in each unit(10a, 10b, 10c, 10d), it is capable to control the spinning position of hot melt as well as spinning order between hot melt and polymer spinning solution.

Meanwhile, by spinning hot melt in nozzle(12) in nozzle pipe(40) installed at both edge of nozzle block(11b) in hot melt unit(10a, 10c) of embodiment 1 of the present invention, hot melt is spun onto both edge to width direction of substrate(15). However, by installing nozzle pipe(40) in both edge and center part of nozzle block(11a) and by spinning hot melt from each nozzle(12) of nozzle pipe(40), it is possible that hot melt is spun onto both edge to width direction and center part of the substrate.

According to the embodiment 1 of the present invention, nozzle pipe (40) is installed at both edge and center part of nozzle block(11a) in hot melt unit(10a, 10c), and the position and number of nozzle pipe (40) is not limited and it can be altered variously.

According to the structure as described above, from nozzle(12) of nozzle pipe(40) which is arranged and installed at both edge of nozzle block(11a) in hot melt unit(10a) among each unit(10a, 10b, 10c, 10d), hot melt is spun. By spinning the hot melt to both edge to width direction of a substrate(15), the substrate(15) is carried to spinning solution unit(10b) positioned on the rear part of the hot melt unit(10a). And through nozzle (12) of multiple nozzle pipe(40) installed in nozzle block(11b), polymer spinning solution is electrospun and laminated onto the substrate which is supplied to the spinning solution unit(10b), and nanofiber or nanofiber filter is manufactured by repeating the process.

Meanwhile, as illustrated in FIG. 15 and 16, among nozzle block(11) installed in each unit(10a, 10b, 10c, 10d) according to embodiment 2 of the present invention, nozzle block(11a) installed in hot melt unit(10a, 10c) comprise nozzle pipe(40), which has multiple nozzle(12) along longitudinal direction, arranged and installed on both edge of the nozzle block(11a), and hot melt from nozzles (12) in the nozzle pipe(40) arranged and installed on both edge of the nozzle block(11a) is spun along transverse direction which cross at right angles to longitudinal direction of transported substrate(15).

In other words, nozzle block(11b), which is installed in spinning solution unit(10b, 10d) among each unit(10a, 10b, 10c, 10d) to electrospin polymer spinning solution onto a substrate(15), has nozzle pipe(40) containing multiple nozzle(12) along longitudinal direction, and the nozzle pipe(40) is arranged and installed in the whole nozzle block(40). While, in nozzle block(11a), which is installed in hot melt unit(10a, 10c) to electrospin hot melt onto a substrate, nozzle pipe(40) having multiple nozzle(12) is installed on both edge of the nozzle block(11a) along longitudinal direction. The hot melt is spun along transverse direction which cross at right angles to longitudinal direction of the substrate, and hot melt is spun repeatedly onto two part of transported substrate which is spaced at regular intervals like interval between nozzle pipes.

Here, from nozzle(12) of nozzle pipe(40) arranged and installed at both edge of nozzle block(11a) in the hot melt unit(10a, 10c), hot melt is spun by controlling spinning speed and time when spinning hot melt.

In other words, according to conveying speed of substrate(15) which is provided to the hot melt unit(10a, 10c), hot melt can be spun as controlling the spinning speed and spinning time from nozzle pipe(40) installed at both edge of the nozzle block(11a).

According to the structure as described above, in case the conveying speed of supplied substrate is rapid, spinning quantity of hot melt is controlled by increasing spinning speed of hot melt and by decreasing spinning time of hot melt. And in case the conveying speed of supplied substrate is slow, spinning quantity of hot melt is controlled by decreasing spinning speed and by increasing spinning time of hot melt. So by conveying speed of the substrate, quantity of hot melt can be controlled according to the kinds of polymer spinning solution, work environment and kinds of products, for example controlling spinning speed and time regularly for making the same spinning quantity of hot melt, or controlling spinning speed and time irregularly for making different quantity of hot melt.

Here, the nozzle block(11a, 11b) installed in hot melt unit(10a, 10c) is connected a main control device described later, and it is preferable to control spinning speed and time of hot melt which is spun from the nozzle pipe(40). It is also preferable to operate this process by affiliating the conveying speed of the substrate(15).

Meanwhile, according to embodiment 2 of the present invention, among nozzle block(11) installed in each unit(10a, 10b, 10c, 10d), the number and arrangement of nozzle pipe(40) from nozzle block(11a) installed in hot melt unit(10a, 10c) and nozzle block(11b) installed in spinning solution unit(10b, 10d) are different each other, but it is possible to make the same structure and arrangement of nozzle pipe(40) from nozzle block(11a) installed in hot melt unit(10a, 10c) and nozzle block(11b) installed in spinning solution unit(10b, 10d).

As described above, in case that nozzle pipes(40) from nozzle block(11a) spinning hot melt and nozzle block(11b) spinning polymer spinning solution have the same structure and arrangement, hot melt provided from the spinning solution main tank is supplied only to nozzle pipe(40) installed at both edge of nozzle block(11a) by open and shut of valve(not shown), it is not supplied to other nozzle pipe (40), so only from nozzle pipe(40) installed at both edge of nozzle block(11a) supplied hot melt can spin.

It is preferable to individually control the nozzle pipe(40) arranged and installed in nozzle block(11a) where hot melt is spun by the valve (not shown) in case that the nozzle pipe (40) is the same structure and arrangement of both nozzle block(11a) spinning hot melt and nozzle block(11b) spinning polymer spinning solution. It is also preferable to individually control the nozzle pipe(40) arranged and installed in nozzle block(11b) where polymer spinning solution spun.

Because of this, by individually controlling each nozzle pipe(40) of nozzle block(11) in each unit(10a, 10b, 10c, 10d), it is capable to control the spinning position of hot melt as well as spinning order between hot melt and polymer spinning solution.

According to the structure as described above, from nozzle(12) of nozzle pipe(40) which is arranged and installed at both edge of nozzle block(11a) in hot melt unit(10a) among each unit(10a, 10b, 10c, 10d), hot melt is spun. By spinning the hot melt to both edge to width direction of a substrate(15), the substrate(15) is carried to spinning solution unit(10b) positioned on the rear part of the hot melt unit(10a). and through nozzle(12) of multiple nozzle pipe(40) installed in nozzle block(11b), polymer spinning solution is electrospun and laminated onto the substrate which is supplied to the spinning solution unit(10b), and nanofiber or nanofiber filter is manufactured by repeating the process.

Meanwhile, as illustrated in FIG. 19 and 20, among nozzle block(11) installed in each unit(10a, 10b, 10c, 10d) according to embodiment 3 of the present invention, nozzle block(11a) installed in hot melt unit(10a, 10c) comprise nozzle pipe(40), which has multiple nozzle(12) along longitudinal direction, arranged and installed on both edge of the nozzle block(11a), and hot melt from nozzles (12) in the nozzle pipe (40) arranged and installed on both edge of the nozzle block(11a) is spun along transverse direction which cross at right angles to longitudinal direction of transported substrate(15).

In other words, the nozzle block(11b), which is installed in spinning solution unit(10b, 10d) among each unit(10a, 10b, 10c, 10d) comprises nozzle pipe(40) containing multiple nozzle(12) along longitudinal direction, and the nozzle pipe(40) is arranged and installed in the whole nozzle block(40), and from the nozzle(12) polymer spinning solution is electrospun onto the transported substrate(15). While, in nozzle block(11a), which is installed in hot melt unit(10a, 10c) to electrospin hot melt onto a substrate, nozzle pipe(40) having multiple nozzle(12) is installed on both edge of the nozzle block(11a) along longitudinal direction and is spaced at regular intervals like interval between nozzle pipes. Thus, hot melt is repeatedly spun onto transported substrate.

According to the embodiment 3 of the present invention, nozzle pipe (40) is installed at both edge and center part of nozzle block(11a) in hot melt unit(10a, 10c), and the position and number of nozzle pipe (40) is not limited and it can be altered variously.

Here, from nozzle(12) of nozzle pipe(40) arranged, installed and spaced at regular intervals to the nozzle block(11a), hot melt is spun by controlling spinning speed and time when spinning hot melt.

In other words, according to conveying speed of substrate(15) which is provided to the hot melt unit(10a, 10c), hot melt can be spun as controlling the spinning speed and spinning time regularly or irregularly from nozzle pipe(40) installed and spaced at regular intervals from nozzle block(11a).

According to the structure as described above, in case the conveying speed of supplied substrate is rapid, spinning quantity of hot melt is controlled by increasing spinning speed of hot melt and by decreasing spinning time of hot melt. And in case the conveying speed of supplied substrate is slow, spinning quantity of hot melt is controlled by decreasing spinning speed and by increasing spinning time of hot melt. So by conveying speed of the substrate, quantity of hot melt can be controlled according to the kinds of polymer spinning solution, work environment and kinds of products, for example controlling spinning speed and time regularly for making the same spinning quantity of hot melt, or controlling spinning speed and time irregularly for making different quantity of hot melt.

Here, the nozzle block(11a, 11b) installed in hot melt unit(10a, 10c) is connected a main control device described later, and it is preferable to control spinning speed and time of hot melt which is spun from the nozzle pipe(40). It is also preferable to operate this process by affiliating the conveying speed of the substrate(15).

Meanwhile, according to embodiment 3 of the present invention, among nozzle block(11) installed in each unit(10a, 10b, 10c, 10d), the number and arrangement of nozzle pipe(40) from nozzle block(11a) installed in hot melt unit(10a, 10c) and nozzle block(11b) installed in spinning solution unit(10b, 10d) are different each other, but it is possible to make the same structure and arrangement of nozzle pipe(40) from nozzle block(11a) installed in hot melt unit(10a, 10c) and nozzle block(11b) installed in spinning solution unit(10b, 10d).

As described above, in case that nozzle pipes(40) from nozzle block(11a) spinning hot melt and nozzle block(11b) spinning polymer spinning solution have the same structure and arrangement, hot melt provided from the spinning solution main tank is supplied only to nozzle pipe(40) installed at both edge of nozzle block(11a) by open and shut of valve(not shown), it is not supplied to other nozzle pipe (40), so only from nozzle pipe(40) installed at both edge of nozzle block(11a) supplied hot melt can spin.

It is preferable to individually control the nozzle pipe(40) arranged and installed in nozzle block(11a) where hot melt is spun by the valve (not shown) in case that the nozzle pipe (40) is the same structure and arrangement of both nozzle block(11a) spinning hot melt and nozzle block(11b) spinning polymer spinning solution. It is also preferable to individually control the nozzle pipe(40) arranged and installed in nozzle block(11b) where polymer spinning solution spun.

Because of this, by individually controlling each nozzle pipe(40) of nozzle block(11) in each unit(10a, 10b, 10c, 10d), it is capable to control the spinning position of hot melt as well as spinning order between hot melt and polymer spinning solution.

According to the structure as described above, from nozzle(12) of nozzle pipe(40) which is arranged and installed at both edge of nozzle block(11a) in hot melt unit(10a) among each unit(10a, 10b, 10c, 10d), hot melt is spun. By spinning the hot melt to both edge to width direction of a substrate(15), the substrate(15) is carried to spinning solution unit(10b) positioned on the rear part of the hot melt unit(10a). and through nozzle(12) of multiple nozzle pipe(40) installed in nozzle block(11b), polymer spinning solution is electrospun and laminated onto the substrate which is supplied to the spinning solution unit(10b), and nanofiber or nanofiber filter is manufactured by repeating the process.

In the embodiment 3 of the present invention, multiple nozzle pipe(40) installed in the nozzle block(11a) is spaced at regular interval, but as described in FIG.21, it is possible to spin the hot melt with installing the nozzle pipe(40) at both edge and center part of the nozzle block(11a).

Meanwhile, as illustrated in FIG. 24 and 25, among nozzle block(11) installed in each unit(10a, 10b, 10c, 10d) according to embodiment 4 of the present invention, nozzle block(11a) installed in hot melt unit(10a, 10c) comprises arranged and installed multiple nozzle(12), and a supply pipe(21) is connected to each nozzle(12), and each supply pipe(21) is equipped with each valve, wherein the each valve operates individually open and shut, so hot melt can be spun as Dot form onto particular area of transported substrate(15).

That is, nozzle block(11b) spinning polymer spinning solution onto a substrate(15) installed in spinning solution unit(10b, 10d) among each unit(10a, 10b, 10c, 10d) comprises multiple nozzle(12) which is arranged and installed to the nozzle block. However, the nozzle block(11b) spinning hot melt onto a substrate(15) installed in hot melt unit(10a, 10c). Each nozzle(12) is individually, controllably connected to spinning solution main tank filled with hot melt through the supply pipe(21), and valve(23) is connected and installed to each supply pipe(21) for individually operating open and shut. Thus, hot melt is spun in Dot form onto particular area of the transported substrate(15).

Here, in case that top of the multiple nozzle pipes (40) arranged and installed on the nozzle block(11a) are stocked with multiple nozzle(12) installed the nozzle block(11a), the nozzle pipe(40) is individually divided so hot melt is supplied to each nozzle(12).

In the embodiment 4 of the present invention, nozzle(12) in nozzle block(11a) installed hot melt unit(10a, 10c) among nozzle block(11) installed in each unit(10a, 10b, 10c, 10d) is individually connected to the spinning solution main tank(8) through the supply pipe(21), and the supply pipe(21) is controlled by valve(23) for spinning hot melt in Dot form only through particular nozzle(12). The nozzle(12) in nozzle block(11b) installed in spinning solution unit(10b, 10d) is connected to spinning solution main tank(8) filled with polymer spinning solution, and it is electrospun. However it is possible to have same structure in nozzle block(11b) installed in spinning solution unit(10b, 10d) and nozzle block(11a) installed in hot melt unit(10a, 10c).

In case of the same structure of the nozzle block(11a) installed in hot met unit(10a, 10c) and the nozzle block(11b) installed in spinning solution unit(10b, 10d), it is preferable to individually control nozzle(12) of nozzle block(11) installed in each unit(10a, 10b, 10c, 10d), so it is capable to control various conditions like the spinning position of hot melt and electrospinning position of polymer spinning solution or spinning order of hot melt and polymer spinning solution.

Meanwhile, in the embodiment 4 of the present invention, nozzle(12) of nozzle block(11a) installed in hot melt unit(10a, 10c) is individually connected to the spinning solution main tank(8) filled with hot melt through the supply pipe(21), wherein each supply pipe(21) is controlled by valve(23), so hot melt is spun through particular nozzle (12) in Dot form. However, it is possible that hot melt is spun in Dot form in particular area of the substrate(15) through nozzle(12) installed in particular position of nozzle block(11a).

According to the structure as described above, from nozzle(12) installed in particular position and arranged in nozzle block(11a) of hot melt unit(10a, 10c) among each unit(10a, 10b, 10c, 10d), hot melt is spun, and the transported substrate(15) is supplied to the spinning solution unit(10b, 10d) positioned on the rear part of the hot melt unit(10a, 10c). Through each nozzle(12) of the nozzle block(11b) polymer spinning solution is electrospun onto the substrate(15) supplied to the spinning solution unit(10b, 10d), and nanofiber web is laminated onto the substrate. Thus, nanofiber or nanofiber filter is manufactured by repeating this process.

Meanwhile, as illustrated in FIG. 28 and FIG. 29, the nozzle block(11a) installed in hot unit(10a, 10c) among each unit(10a, 10b, 10c, 10d) of the electrospinning device(10) of the embodiment 5 of the present invention is equipped with multiple nozzle(12), and hot melt is spun in Dot form in particular area of the transported substrate(15) in particular area of nozzle block(11a).

In other words, nozzle block(11b), which is electrospinning polymer spinning solution onto a substrate(15) and installed in spinning solution unit(10b, 10d) among each unit(10a, 10b, 10c, 10d), is equipped with multiple nozzle(12), and the nozzle block(11a), which is installed in hot melt unit(10a, 10c) and spinning hot melt, is equipped with multiple nozzle(12), wherein each nozzle(12) is installed in particular position, so hot melt is spun in particular area in Dot form.

At this time, nozzle(12) arranged and installed in nozzle block(11a) in hot melt unit(10a, 10c) is installed at each edge and the center part of the nozzle block(11a). That is, nozzle(12) installed in particular area of the nozzle block(11a) is installed each edge and 5 spot in the center part of nozzle block(11a) in hot melt unit(10a, 10c).

By installing the nozzle(12) to each edge and center part of nozzle block(11a) and by spinning hot melt in Dot form in particular area of the substrate(15), nanofiber web laminated on the substrate(15) is easily bonded to the substrate.

In the embodiment 5 of the present invention, the nozzle(12) is arranged and installed at edge and 5 spot in center part of the nozzle block(11a), however the position and number of the nozzle(12) is not limited, and it can be altered variously.

According to the structure as described above, hot melt is spun from nozzle(12) installed in particular area of nozzle block(11a) of hot melt unit(10a, 10c) among each unit(10a, 10b, 10c, 10d), and by spinning the hot melt on the bottom layer of the transported substrate(15), the substrate(15) is supplied to the spinning solution unit(10b, 10d), and the polymer spinning solution through each nozzle(12) of nozzle block(11b) on the substrate(15) is electrospun and nanofiber web is laminated on the substrate(15). Thus nanofiber or nanofiber filter is manufactured by repeating the above process.

Meanwhile, in the embodiment 5 of the present invention, nozzle(12) is arranged and installed in particular area of nozzle block(11a) of the hot melt unit(10a, 10c), but the multiple nozzles(12) are arranged and installed the whole nozzle block(11a) and the nozzles(12) are connected to the spinning solution main tank(8) filled with hot melt through the supply pipe(not shown) for controlling them individually. By installing the valve(not shown) to the supply pipe for operating individually open and shut, it is possible to spin in Dot form of hot melt to the particular area of the substrate(15).

In other words, the nozzle(12) installed nozzle block(11a, 11b) in all hot melt unit(10a, 10c) and spinning solution unit(10b, 10d) is installed at the top part of nozzle pipe(40) which is multiply arranged and installed in the nozzle block(11a, 11b). And the nozzle block(11a) spinning hot melt onto the substrate(15) installed in hot melt unit(10a, 10c) is equipped with multiple nozzle(12), wherein the each nozzle(12) is connected to the spinning solution main tank filled with hot melt through the supply pipe for individually controlling, and wherein the valve is installed individually for operating open and shut to the each supply pipe. Thus it is capable to spin hot melt in Dot form in particular area of transported substrate.

Here, in case that multiple nozzles(12) installed in the nozzle block(11a) are equipped at the top part of the nozzle pipe(40) installed on the nozzle block(11a), the nozzle pipe(40) is individually divided so hot melt is supplied to each nozzle(12).

In case of the same structure of the nozzle block(11a) installed in the hot melt unit(10a, 10c) and the nozzle block(11b) installed in the spinning solution unit(10b, 10d), it is preferable to individually control the nozzle(12) of nozzle block(11) installed in each unit(10a, 10b, 10c, 10d), so it is capable to control the spinning position of hot melt as well as spinning order between hot melt and polymer spinning solution.

Meanwhile, as illustrated in FIG. 32 and 33, among nozzle block(11) installed in each unit(10a, 10b, 10c, 10d) according to embodiment 6 of the present invention, nozzle block(11a) installed in hot melt unit(10a, 10c) comprise nozzle pipe(40), which has multiple nozzle(12) arranged and installed along longitudinal direction, and the nozzle pipe(40) of the nozzle block(11a) is connected to the spinning solution main tank(8) filled with hot melt through the supply pipe(not shown), and hot melt supplied from the spinning solution main tank(8) is carried to the nozzle pipe(40) and the hot melt supplied from the nozzle pipe(40) is spun onto the substrate(15) through each nozzle(12).

At this time, the nozzle pipe(40) of the nozzle block(11a) is connected to the spinning solution main tank(8) through the supply pipe(21), and the supply pipe which is connected to the nozzle pipe(40) is connected and installed to each nozzle(12), and valve(23) is equipped in the supply pipe(21) which is connected between the spinning solution main tank(8) and each nozzle pipe(40), and the valve(23) is also equipped in the supply pipe(25) which is connected to each nozzle(12) from each nozzle pipe(40).

In the supply pipe(21) connected to each nozzle pipe(40 from the spinning solution main tank(8), valve(23) is equipped, and it is connected to the nozzle pipe (40), and the valve (23) is also equipped in each supply pipe(25) which is connected to each nozzle(12).

According to the structure as described above, hot melt is spun in particular area and part of the substrate (15) through particular nozzle pipe(40) and nozzle(12) among the nozzle pipe(40) which is arranged and installed in the nozzle block(11a) and the nozzle(12) installed in the nozzle pipe(40).

At this time, by operating the valve (23) of each supply pipe(21) installed the spinning solution main tank(8) filled with the hot melt and each nozzle pipe (40) of each nozzle block(11a), hot melt is controlled to be spun onto the substrate(15) positioned in particular area of the nozzle pipe(40), and the valve(23) of each supply pipe(25) separated multitudinously and installed each nozzle(12) is operated individually for the open and shut, so hot melt is controlled to be spun onto the substrate(15).

By controlling the open and shut of each valve (27) of the supply pipe(25) installed each multiple nozzle(12) in the nozzle pipe(40) or of the valve(23) of the supply pipe(21) installed the nozzle pipe(40) in the nozzle block(11a) and by spinning hot melt, hot melt is spun only through the particular nozzle(12) installed the nozzle pipe(40) and nozzle pipe(40) installed to the nozzle block(11a). Because of it, hot melt can be spun in particular or partial form only in the particular area and part of the substrate which is carried to the hot melt unit(10a, 10c).

In the embodiment 6 of the present invention, each nozzle pipe(40) in nozzle block(11a) installed hot melt unit(10a, 10c) among nozzle block(11) installed in each unit(10a, 10b, 10c, 10d) is individually connected to the spinning solution main tank(8) through the supply pipe(21) and valve(23), and the multiple nozzle(12) equipped in each nozzle pipe(40) is connected to the nozzle pipe(40), connected and installed individually to each supply pipe(25) which divaricate into multiple, and each supply pipe(25) is controlled by valve(27) so hot melt is spun through particular nozzle in particular and partial form. Nozzle(12) of nozzle block(11b) installed in the spinning solution unit(10b, 10d) is wholly connected to the spinning solution main tank(8) filled with the polymer spinning solution, and simultaneously electrospin the hot melt. However, it is possible to have the same structure of the nozzle block(11b) of the spinning solution unit(10b, 10d) and the nozzle block(11a) of the hot melt unit(10a, 10c).

In case of the same structure of the nozzle block(11a) installed in hot met unit(10a, 10c) and the nozzle block(11b) installed in spinning solution unit(10b, 10d), by individually controlling the nozzle(12) in nozzle pipe(40) and the nozzle pipe (40) of the nozzle block(11) in each unit(10a, 10b, 10c, 10d), it is capable to control various conditions like the spinning position of hot melt and electrospinning position of polymer spinning solution or spinning order of hot melt and polymer spinning solution.

According to the structure as described above, hot melt is spun from particular nozzle pipe (40) and nozzle (12) among the nozzle pipe(40) installed in nozzle block(11a) of hot melt unit(10a, 10c) among each unit(10a, 10b, 10c, 10d) and among the multiple nozzle(12) in the nozzle pipe(40), and the transported substrate(15) by spinning hot melt is supplied to the spinning solution unit(10b) positioned on the rear part of the hot melt unit(10a). Through each nozzle(12) of nozzle block(11b) on the substrate(15) which is supplied to the spinning solution unit(10b), polymer spinning solution is electrospun and nanofiber web is laminated. Thus nanofiber or nanofiber filter is manufactured by repeating the above process.

Meanwhile, as illustrated in FIG.36 and FIG.37, among nozzle block(11) installed in each unit(10a, 10b, 10c, 10d) according to embodiment 6 of the present invention, the nozzle block(11a) installed in the hot melt unit(10a, 10c) is equipped with nozzle(12) which is arranged and installed in particular area and part. The nozzle(12) installed in particular area in the nozzle block(11a) is supplied hot melt with connecting to spinning solution main tank(8) filled with hot melt, and from it, supplied hot melt is spun onto the substrate(15).

According to the structure as described above, from the nozzle(12) which is installed as segmental form in particular area of the nozzle block(11a), hot melt is spun onto the particular area and part of the substrate(15).

In the embodiment 7 of the present invention, nozzle(12) is arranged and installed as segmental form in particular area of the nozzle block(11a). However, each nozzle pipe(40) in which multiple nozzles(12) are arranged and installed along longitudinal direction in whole nozzle block(11a) is individually controlled to be open and shut by supply pipe(not shown) and valve(not shown). Each nozzle(12) divaricates to each supply pipe(not shown), and the supply pipe is individually controlled to be open and shut by valve. By controlling each valve and by spinning hot melt only from nozzle(12) installed as segmental form in particular area, it is possible to spin hot melt as segmental form onto the particular area and part of the substrate(15).

At this time, each nozzle pipe(40) which arranged and installed in the nozzle block(11a) is each connected to a spinning solution main tank(8) filled with hot melt through supply pipe and valve, and the multiple nozzle(12) which is each connected to each nozzle pipe(40) is connected to the nozzle pipe (40), and it is controlled by valve. Thus only through particular nozzle, hot melt can be spun as segmental form in particular area.

In case that the hot melt unit(10a, 10c) and the spinning solution unit(10b, 10d) have the same structure in nozzle block, the nozzle pipe(40) of the nozzle block(11a) and the nozzle(12) of the nozzle pipe(40) are individually controlled, so it is capable to control various conditions like the spinning area, spinning form and shape of hot melt and electrospinning position of polymer spinning solution or spinning order of hot melt and polymer spinning solution.

In an embodiment of the present invention, the multiple nozzles(12) are arranged and installed as segmental form in each edge and particular area of center part of the nozzle block(11a), however the area, form and position of the nozzle(12) which is arranged and installed in the nozzle block(11a) is not limited.

Here, the supply pipe of multiple nozzles(12) which are arranged and installed as segmental form in particular area of the nozzle block(11a) contains each valve, and the nozzle(12) installed as segmental form in particular area is individually controlled by valve, so it is possible to spin hot melt onto particular area as segmental form of the substrate(15) with nozzle forming another form and shape.

By spinning hot melt onto the substrate(15) prior to electrospinning polymer spinning solution on the substrate(15) and by spinning hot melt only onto a particular area and part of the substrate(15), it is prevent separating nanofiber web electrospun and laminated on the substrate(15) from the substrate(15). And by spinning hot melt only a particular location, area and part of the substrate(15), it minimizes interference of hot melt to electrospun polymer spinning solution, so property and quality of the manufactured nanofiber or nanofiber filter can be improved.

Here, among each units(10a, 10b, 10c, 10d) of the electrospinning device(1), in front of the unit(10a) located in the front-end, by electrospinning of polymer spinning solution provided to the unit(10a), a supply roller(3) for providing a substrate(15) laminating formed a nanofiber web, among each unit(10a, 10b, 10c, 10d), in back of the unit(10d) located in the rear-end, a winding roller(5) for winding a substrate(15) laminating formed a nanofiber web.

In addition, in each unit(10a, 10b, 10c, 10d) of the electrospinning device(1), further comprising an auxiliary carry device(16) for carrying a substrate(15) provided through the supply roller(3) to a winding roller(5) and simultaneously adjusting feed speed of a substrate(15).

Also, the electrospinning device(1) comprises a main control device(7), and the main control device controls a nozzle block(11) installed in each unit(10a, 10b, 10c, 10d), an auxiliary carry device(16), and a voltage generator(14a, 14b, 14c, 14d), and simultaneously connected to a thickness measuring device(70), a substrate feed speed adjusting device(30), and a permeability measuring device, and controls them.

Meanwhile, through each unit(10a, 10b, 10c, 10d) of the electrospinning device(1), a laminating device(90) for laminating a nanofiber web electrospun on a substrate(15) is provided in back of a unit(10d) located in the lowermost among each unit(10a, 10b, 10c, 10d), and by the laminating device(90), a nanofiber web electrospun through the electrospinning device(1) performs post-processing.

As described above, going through each unit(10a, 10b, 10c, 10d) of the electrospinning device(1), a substrate(15) which electrospun polymer spinning solution and laminating formed a nanofiber web is preferable comprising non-woven fabric or fabric, and it is not limited thereto.

In this case, material of polymer spinning solution spun through each unit(10a, 10b, 10c, 10d) of the electrospinning device(1) is not limited, for example polypropylene(PP), polyethylene terephthalate(PET), polyvinylidene fluoride, nylon, polyvinyl acetate, polymethyl methacrylate, polyacrylonitrile(PAN), polyurethane(PUR), polybutylene terephthalate(PBT), polyvinyl butyral, polyvinyl chloride, polyethyleneimine, polyolefin, polylactic acid(PLA), polyvinyl acetate(PVAc), polyethylene naphthalate(PEN), polyamide(PA), polyvinyl alcohol(PVA), polyethylene imide(PEI), polylaprolactone(PCL), polyacticacidglycidyl(PLGA), silk, cellulose, and chitosan, among them, polypropylene(PP) material and heat-resistant polymer material, polyamide, polyimide, polyamideimide, poly(meta-phenylene isophthalamide), polysulfone, polyether ketone, polyether imide, polyethylene terephthalate, polytrimethylene terephthalate, polyethylene naphthalate, and polyphospazene group such as polytetrafluoroethylene, polydiphenoxyphosphazene, poly vis[2-(2-methoxyethoxy)phosphazene], polyurethane copolymer such as polyurethane and polyetherurethane, and cellulose acetate, cellulose acetate butyrate, and cellulose acetate propionate are preferably used in common.

In addition, in the units(10a, 10b, 10c, 10d), polymer spinning solution provided through a nozzle(12) is solution which dissolved polymer of synthetic resin material capable of electrospinning in appropriate solvent, it is not limited if type of solvent is also capable of dissolving polymer.

For example, phenol, formic acid, sulfuric acid, m-cresol, tfluorineacetatenhydride, dichloromethane, water, N-methylmorepholine, N-oxide, chloroform,tetrahydreofuran, and aliphatic kentone group such as methylisobutylketone and methylethylketone, and aliphatic hydrotyl group such as hexane, tetrachloretlylene, acetone, glycol group, propylene glycol, diethylene glycol, etlylene glycol, and halogen compound group such as tricrolethylene, dichloromethane, and aromatic compound group such as toluene, xylene, and alicyclic compound group such as cyclohexanone, cyclohexane, and ester group such as n-butyl acelate, ethyl acetate, and aliphatic ether group such as butyl cellosolve, acetic acid2-ethoxyethanol, 2-ethoxyethanol, amide dimethylformamide, and dimethyl acetamide, and a plurality of type of solvent can be mixed and used. For polymer spinning solution, additives such as conductive improver is preferably contained, and it does not limited thereto.

Here, the electrospinning device(1) is provided an overflow device(200). In other words, in each units(10a, 10b, 10c, 10d) of the electrospinning device(1) is each provided an overflow device(200) comprising a spinning solution main tank(8), a second feed pipe(216), a second feed control device(218), a middle tank(220), and a recycled tank(230).

According to the present invention, in each unit(10a, 10b, 10c, 10d) of the electrospinning device(1), and over flow device(200) is each provided, in a unit(10a) of the units(10a, 10b, 10c, 10d), an overflow device(200) is provided, and in the overflow device(200), other units(10b, 10c, 10d) are connected in series. And it is also possible to provide each overflow device(200) to each hot melt unit(10a, 10c) spinning hot melt among each unit(10a, 10b, 10c, 10d) or provide each overflow device(200) to each polymer spinning solution unit(10b, 10d).

In addition, among each unit(10a, 10b, 10c, 10d), in any one unit(10a) spinning hot melt, an overflow device(200) is provided, and in the overflow device(200), another unit(10c) is connected in series, among each unit(10a, 10b, 10c, 10d), in any one unit(10b) electrospinning polymer spinning solution and forming nanofiber web, an overflow device(200) is provided, and in the overflow device(200), another unit(10d) is connected in series.

According to the structure as described above, the spinning solution main tank(8) of hot melt unit(10a, 10c) filled with hot melt stores hot melt, and the spinning solution main tank(8) of spinning solution unit(10b, 10d) filled with polymer spinning solution stores polymer spinning solution. In each spinning solution main tank(8), an agitation device(211) for preventing separation and solidification of polymer spinning solution or hot melt is provided.

Also, the second feed pipe(216) comprises a pipe(not-shown) line-focused to the spinning solution main tank(8) or a recycled tank(230), and valves(212, 213, 214), and carries polymer spinning solution or hot melt from the spinning solution main tank(8) filled with hot melt or polymer spinning solution or the recycled tank(230) to a middle tank(220). Meanwhile, the second control device(218) controls valves(212, 213, 214) of the second feed pipe (216) and controls carry operation of the second feed pipe(216).

Here, the valve(212) controls carrying of polymer spinning solution or hot melt from a spinning solution main tank(8) filled with polymer spinning solution or hot melt to a middle tank(220), the valve(213) controls carrying of polymer spinning solution or hot melt from a recycled tank(230) to a middle tank(220), and the valve(214) controls amount of polymer spinning solution or hot melt from a spinning solution main tank(8) and a recycled tank(230) to a middle tank(220).

As described above, through a second sensor(222) provided in a middle tank(230) controlled by the valve(212, 213, 214), level of measured polymer spinning solution or hot melt is controlled.

The middle tank(220) stores polymer spinning solution or hot melt provided from a spinning solution main tank(8) filled with polymer spinning solution or hot melt or a recycled tank(230), the nozzle block(11a) of hot melt unit(10a, 10c) and the nozzle block(11b) of spinning solution unit(10b, 10d) among the nozzle block(11) provides polymer spinning solution or hot melt, and a second sensor(222) is provided for measuring level of provided polymer spinning solution or hot melt.

Here, the second sensor(222) is preferably comprising a sensor capable of measuring level of polymer spinning solution or hot melt such as light sensor or infrared light sensor, and it does not limited thereto.

Meanwhile, a supply pipe(24) for providing polymer spinning solution or hot melt to bottom of the middle tank(220) through a nozzle block(11) and a supply control valve(242) are provided, and the supply control valve(242) controls supplying operation of polymer spinning solution or hot melt through a supply pipe(240).

The recycled tank(230) stores retrieved polymer spinning solution or hot melt by overflow, and provided an agitation device(231) for preventing separation and solidification of polymer spinning solution or hot melt.

Here, the first sensor(232) is preferably comprising a sensor capable of measuring level of polymer spinning solution or hot melt such as a light sensor or an infrared light sensor, and it does not limited thereto.

Meanwhile, in the nozzle block(11), overflowed polymer spinning solution or hot melt is each individually retrieved through a spinning solution recovery path(250) provided in bottom of a nozzle block(11), and the spinning solution recovery path(250) retrieves polymer spinning solution or hot melt in a recycled tank(230) through a first feed pipe(251).

In addition, the first feed pipe(251) comprises a pipe(not shown) connected to the recycled tank(230) and a pump(not shown), and by power of the pump, polymer spinning solution or hot melt is carried from spinning solution recovery path(250) to a recycled tank(230).

In this case, the recycled tank is preferably provided one or more, and in the case of two or more of the recycled tank(230) are provided, a plurality of first sensor(232) and valve(233) are preferably provided.

Here, in the case of the recycled tank(230) is provided two, valve(233) located in top of the recycled tank(230) is provided in corresponded number, and because of this, the first feed control device(not shown) controls 2 or more valve(233) located in top according to level of the first sensor(232) provided in a recycled tank(230), and controls whether to individually carry polymer spinning solution or hot melt to a recycled tank(230) among a plurality of recycled tank(230).

Meanwhile, the electrospinning device(1) is provided a VOC recycling device(300). In other words, in each unit(10a, 10b, 10c, 10d) of the electrospinning device(1), VOC recycling device(300) is provided which comprises a condensation device(310) for condensing and liquefying VOC which is generated when spinning polymer spinning solution or hot melt through a nozzle(12) of nozzle pipe(40), a distillation device(320) for distilling and liquefying VOC condensed through the condensation device(310), and a solvent storage device(330) for storing solvent liquefied through the distillation device(320).

Here, the condensation device(310) is preferably comprising water cooling, evaporative, and air cooling condensation device, and it does not limited thereto.

Meanwhile, VOC in evaporation state which is generated from each of the unit(10a, 10b, 10c, 10d) is flowed in a condensation device(310), and pipes(311, 312) for storing VOC in liquefaction state generated from the condensation device(310) to a solvent storage device(330) are each connected and installed. In other words, pipes(311, 331) for mutually connecting each of the unit(10a, 10b, 10c, 10d) and the condensation device(310), and connecting the condensation device(310) and the solvent storage device(330) are each connected and installed.

In the present invention, it comprises structure of condensing VOC through the condensation device(310) and providing condensed VOC in liquefaction state to a solvent storage device(330), and in the case of a distillation device(320) is provided between the condensation device(310) and the solvent storage device(330) and applied to one or more solvent, it is possible to comprise each solvent to be separated and classified.

Here, VOC recycling system(300) is each provided for recycling the VOC which is generated in hot melt unit(10a, 10c) and spinning solution unit(10b, 10d) among each unit(10a, 10b, 10c, 10d), and it is preferable to individually store and recycle the VOC which is generated when electrospinning the hot melt and the polymer spinning solution.

Meanwhile, the distillation device(320) is connected to the condensation device(310) and heats in high temperature of VOC in liquefaction state and evaporates, and again cools it, and liquefied VOC is provided to the solvent storage device(330).

In this case, the VOC recycling device(300) comprises a condensation device(310) which provides air and cooling water to vaporized VOC discharged through each unit(10a, 10b, 10c, 10d) and condenses and liquefies, a distillation device(320) which heats condensed VOC through the condensation device(310), makes it in evaporation state and again cools and makes it in liquefaction state, and a solvent storage device(330) which stores VOC liquefied through the distillation device(320). Here, the distillation device(320) preferably comprises a fractional distillation, and it does not limited thereto.

Also, pipes (311, 321, 331) are each connected and installed for mutually connecting each of the unit(10a, 10b, 10c, 10d) and a condensation device(310), the condensation device(310) and a distillation device(320), and the distillation device(320) and a solvent storage device(330).

Meanwhile, solvent content of polymer spinning solution which is overflowed and retrieved to a recycled tank(230), and in this case, the content measuring extracts sample from part of polymer spinning solution in recycled tank(230) and measures the sample, and such polymer spinning solution analysis and measurement are performed through conventional method.

As described above, in the case of solvent is required according to the measuring result, provided to the solvent storage device(330), and VOC in liquefaction state occurred when electrospinning polymer spinning solution or hot melt is provided to the recycled tank(230). In other words, according to measuring result of liquefied VOC, the required amount is provided to the recycled tank(230) and reused and recycled as solvent.

Meanwhile, a case(18) comprising each unit(10a, 10b, 10c, 10d) of the electrospinning device(1) preferably comprises an electric conductor, the case(18) comprises an electric insulator, or the case(18) can be mixed and applied an electric conductor and an electric insulator, and the case can comprise in various materials.

In addition, in the case of top of the case(18) comprises an electric insulator and the bottom is mixed and applied an electric conductor, an insulation member(19) can be deleted. For this, the case is formed in one case mutually combining top forming an electric conductor and bottom forming an electric insulator, and it does not limited thereto.

As described above, the case(18) comprises an electric insulator and an electric conductor, and by top of the case(18) comprises an electric insulator, in order to attach a collector (13) to top and inner side of the case(18), separately provided insulation member(19) can be deleted, and because of this, composition of device can be simplified. Moreover, in the case of insulation between the collector(13) and the case(18) can be optimized and performing electrospinning by applying 35kV between a nozzle block(11) and a collector(13), insulation breakdown between the collector(13) and the case(18) and other members can be prevented.

In addition, leak current can be stopped in a desired realm, and observation of current provided from voltage generators (14a, 14b, 14c, 14d) is possible, and errors of the electrospinning device(1) can be early detected, and because of this, the electrospinning device(1) can be operated consecutively in long time, and production of nanofiber in required performance is stable, and mass-producing of nanofibers is possible.

Here, thickness of the case(18) forming an electric insulator satisfies "a=8mm".

Because of this, in the case of applying 40kV between the nozzle block(11) and the collector(13) and performing electrospinning, insulation breakdown occurring between a collector(13) and a case(18) and other members can be prevented, and leak current can be limited in desired realm. Also, the distance between the case(18) forming an electric insulator material inner side and the collector(13) outer side comprises satisfying "a+b=80mm".

Because of this, in the case of operating an electrospinning device applying 40kV between the nozzle block(11) and the collector(13), it can prevent insulation breakdown occurring between the collector(13) and the case(18) and other members, and limit leak current in prescribed realm.

Meanwhile, the electrospinning device(1) is provided a thickness measuring device(70). In other words, among each unit(10a, 10b, 10c, 10d), the rear part of the spinning solution unit(10b, 10d) spinning polymer spinning solution of the electrospinning device(1) is provided a thickness measuring device(70) for controlling of a substrate(15) feed speed(V) and a nozzle block(11), and according to thickness of measured nanofiber web, a substrate(15) feed speed and a nozzle block(11) are controlled.

According to the structure as described above, in the case of thickness of nanofiber web which after electrospinning in each unit(10b, 10d) of the electrospinning device(1) and laminating formed on a substrate(15) is thinner than reference value, feed speed(V) of the unit(10b, 10d) is decreased, discharging amount of polymer spinning solution spun from a nozzle block(11b) is increased, and by adjusting voltage intensity of voltage generators(14b, 14d), increasing discharging amount of polymer spinning solution per unit, and thickens a nanofiber web laminating formed on a substrate(15).

Meanwhile, in the case of thickness of nanofiber web which after electrospinning in each unit(10b, 10d) of the electrospinning device(1) and laminating formed on a substrate(15) is measured thicker than reference value, feed speed of the next unit(10b, 10d) is increased, discharging amount of polymer spinning solution spun from a nozzle block(11b) is decreased, and by adjusting voltage intensity of voltage generators(14b, 14d), decreasing discharging amount of polymer spinning solution per unit, and thins a nanofiber web laminating formed on a substrate(15).

Here, the thickness measuring device(70) puts between a substrate(15) income and provided, the top and bottom side are arranged in opposite sides, a thickness measuring portion(not shown) which measures distance to top or bottom of the substrate(15) by ultrasonic wave measuring method, and comprising a pair of ultrasonic wave, longitudinal wave, and transverse wave measuring method.

According to the thickness measuring device(70) comprising ultrasonic wave measuring method, through the measured distance, thickness of nanofiber web laminating formed on the substrate(15) is calculated.

In other words, the thickness measuring device(70) projects ultrasonic wave, longitudinal wave, transverse wave to the substrate(15) laminating formed nanofiber web, longitudinal wave and transverse wave each ultrasonic signal measures reciprocating motion time on the substrate(15), in other words, measures each propagation time of longitudinal wave and transverse wave, and through propagation time of measured longitudinal wave and transverse wave, propagation velocity of longitudinal wave and transverse wave from reference temperature of the substrate(15) laminating formed nanofiber web, and a desired formula using constant temperature of propagation velocity of longitudinal wave and transverse wave, thickness of nanofibers can be calculated.

By calculating thickness of a substrate(15) laminated a nanofiber web, in state of uneven inner temperature, by compensating error according to change is propagation velocity according to temperature change, thickness can be precisely measured, and even though there are some form of temperature distribution in a nanofiber web, thickness can be precisely measured.

Meanwhile, the electrospinning device(1) is provided a permeability measuring device(80). In other words, among each unit(10a, 10b, 10c, 10d) of the electrospinning device(1), in the rear of the unit(10d) located in the rear-end, a permeability measuring device(80) for measuring permeability of a nanofiber web laminating formed on a substrate(15) through each unit(10a, 10b, 10c, 10d) is provided, and the permeability measuring device(80) measure permeability of a nanofiber web by ultrasonic wave.

As described above, polymer spinning solution is electrospun through each unit(10b, 10d) of the electrospinning device(1), after laminating forming a nanofiber web, and a substrate provided to a permeability measuring device(80) measures measuring value according to ultrasonic signal projected from the permeability measuring device(80), and in the case of permeability of measured nanofiber web is measured large, feed speed of each unit(10b, 10d) is decreased, discharging amount of a nozzle block(11b) is increased, and by adjusting voltage intensity of voltage generators(14b, 14d), discharging amount of polymer spinning solution per unit is increased, laminating amount of polymer spinning solution on a substrate(15) is increased, and permeability is formed small.

In addition, through each unit(10b, 10d) of the electrospinning device(1), polymer spinning solution is electrospun, after laminating forming a nanofiber web, a substrate(15) provided to a permeability measuring device(80) measures measuring value according to ultrasonic signal projected from the permeability measuring device(80), and in the case of permeability of measured nanofiber web is measured small, feed speed of each unit(10b, 10d) is increased, discharging amount of nozzle block(11b) is decreased, by adjusting voltage intensity of voltage generators(14b, 14d), discharging amount of polymer spinning solution per unit is decreased, laminating amount of polymer spinning solution on a substrate(15) is decreased, and permeability is formed large.

As described above, after measuring permeability of the nanofiber web, by controlling feed speed of each unit(10b, 10d) and a nozzle block(11b) according to permeability, a nanofiber web having even permeability can be produced.

Here, in the case of permeability deviation(P) of the nanofiber web is less than a desired value, feed speed (V) is not changed from the initial value, and in the case of the deviation is a desired value or more, feed speed can be changed from the initial value, and feed speed control can be simplified by a feed speed controlling device.

Moreover, except the feed speed control, discharging amount of a nozzle block(11b) and voltage intensity can be adjusted, and in the case of permeability deviation (P) is less than a desired value, discharging amount of a nozzle block(11b) and voltage intensity are not changed from the initial value, and in the case of the deviation is a desired value or more, discharging amount of a nozzle block(11b) and voltage intensity are changed from the initial value, and control of discharging amount of the nozzle block(11) and voltage intensity can be simplified.

Here, after spinning hot melt between the hot melt unit(10a, 10c) and the spinning solution unit(10b, 10d) of the electrospinning device(1), a substrate feed speed adjusting device(30) for adjusting feed speed of a substrate(15) is further provided.

For this, the substrate feed speed adjusting device(30) comprises a buffer section(31) formed between the hot melt unit(10a, 10c) and the spinning solution unit(10b, 10d) of the electrospinning device(1), a pair of support roller(33, 33') provided on the buffer section(31) and supporting a substrate(15), and an adjusting roller(35) provided between the pair of support roller(33, 33').

In this case, the support roller(33, 33') when carrying a substrate (15) spun hot melt by a nozzle(12) is for supporting carrying of the substrate(15), and a buffer section(31) formed between the hot melt unit(10a, 10c) and the spinning solution unit(10b, 10d) is each provided in the front-end and the rear-end.

Also, the adjusting roller(35) is provided between the pair of support roller(33, 33'), the substrate(15) is wound, and by the adjusting roller(35) up and down movement, feed speed and motion time of substrates (15a, 15b) between the hot melt unit(10a, 10c) and the spinning solution unit(10b, 10d).

For this, a sensing sensor(not shown) for sensing feed speed of substrates(15a, 15b) between the hot melt unit(10a, 10c) and the spinning solution unit(10b, 10d) is provided, and a main control device(7) is connected for controlling motion of an adjusting roller(35) according to feed speed of substrates (15a, 15b) between the hot melt unit(10a, 10c) and the spinning solution unit(10b, 10d) measured by the sensing sensor.

According to the present invention, feed speed of substrates (15a, 15b) between the hot melt unit(10a, 10c) and the spinning solution unit(10b, 10d) is sensed, composition comprises control portion controls adjusting roller(35) motion according to feed speed of sensed substrates(15a, 15b), provided outer side of a collector(13) to carry the substrate(15a, 15b), and an auxiliary belt(16a) or an auxiliary belt roller(16b) driving the auxiliary belt(16a), driving speed of a motor(not shown) is sensed, and according to this, composition comprising the control portion controls motion of an adjusting roller(35) is possible.

Meanwhile, as illustrated in FIG. 3 and FIG. 4, in each nozzle pipe(40) of a nozzle block(11) installed in each unit(10a, 10b, 10c, 10d) of the electrospinning device(1), a temperature adjusting control device(60) is provided.

In other words, installed in each of the unit(10a, 10b, 10c, 10d), a temperature adjusting control device(60) for adjusting temperature of polymer spinning solution or hot melt to a nozzle pipe(40) of a nozzle block(11) provided polymer spinning solution or hot melt to a plurality of nozzle(12) provided in the top.

Here, flow of polymer spinning solution or hot melt in the nozzle block(11) is provided from a spinning solution main tank(8) stored polymer spinning solution or hot melt through a spinning solution flowing pipe(not shown) to each nozzle pipe(40).

Also, polymer spinning solution or hot melt provided to each of the nozzle pipe(40) is electrospun and discharged through a plurality of nozzle(12) and collected to a substrate(15) in nanofiber web form. In this case, a nozzle(12) equipped in several number which is separated in predetermined space in length direction of each nozzle pipe (40) and top of each of the nozzle pipe(40) comprises conductive member and in state of electrically connected, equipped to a nozzle pipe(40).

Here, the temperature adjusting control device(60) is provided in heat line(42) form in inner periphery of the nozzle pipe(40) which is for controlling temperature adjustment of polymer spinning solution and hot melt provided and inflow to each nozzle pipe(40). In other words, as illustrated in FIG. 5 to FIG. 6, the temperature adjusting control device(60) of heat line(41) form in inner periphery of nozzle pipe(40) of the nozzle block(11) is formed in spiral form in inner periphery of a nozzle pipe(40) of a nozzle block(11), and adjusts polymer spinning solution and hot melt provided and inflow to a nozzle pipe(40).

In an embodiment of the present invention, in inner periphery of nozzle pipe(40) of the nozzle block(11), a temperature adjusting control device(60) of heat line(41) form is provided in spiral form, and the temperature adjusting control device(60) is formed in heat line(41) form, provided several number in length direction in inner periphery of the nozzle pipe(40), and it can comprise adjusting temperature of polymer spinning solution and hot melt, the temperature adjusting control device(60) is formed in approximately "C" form, provided in inner periphery of the pipe, and it can comprise to adjust temperature of polymer spinning solution and hot melt.

Here, in order to adjust temperature of the plurality of nozzle pipe(40), each nozzle pipe(40) and a temperature adjusting control device(60) is connected to a main control device(7), and according to the main control device(7), temperature of polymer spinning solution and hot melt is adjusted and controlled.

Meanwhile, as illustrated in FIG. 7, an auxiliary carry device(16) for adjusting feed speed of a substrate(15) or carrying a substrate(15) income and provided to each unit(10a, 10b, 10c, 10d) comprises an auxiliary belt(16a) which facilitates desorption and carrying of a substrate(15) attached to a collector(13) in electrostatic gravitation installed in each unit (10a, 10b, 10c, 10d) and synchronizes and rotates to feed speed of a substrate(15), and an auxiliary belt roller(16b) which supports and rotates the auxiliary belt(16a).

According to the structure as mentioned above, an auxiliary belt(16a) rotates by rotation of the auxiliary belt roller(16b), a substrate(15) incomes and supplies to units(10a, 10b) by rotation of the auxiliary belt(16a), for this, any one auxiliary belt roller(16b) among the auxiliary belt roller(16b) is connected to a motor capable of rotation.

According to an embodiment of the present invention, the auxiliary belt(16a) is provided 5 auxiliary belt rollers(16b), comprising by a motor motion, any one auxiliary belt roller(16b) rotates, as auxiliary belt(16a) rotates simultaneously the other auxiliary belt roller(16b) rotates, or the auxiliary belt(16a) is provided 2 or more auxiliary belt rollers(16b), comprising by a motor motion, any one auxiliary belt roller(16b) rotates, according to this, auxiliary belt(16a) and the other auxiliary belt roller(16b) rotate.

Meanwhile, in an embodiment of the present invention, the auxiliary carry device(16) comprises an auxiliary belt roller(16b) which is capable of driving by a motor and an auxiliary belt(16a), and as illustrated in FIG. 8, the auxiliary belt roller(16b) can comprise a roller with low coefficient of friction, and a roller rotates by less power income and provided by a substrate(15).

In this case, the auxiliary belt roller(16b) is preferably comprising a roller including bearing with low coefficient of friction, and because of this, a motor can be deleted.

In an embodiment of the present invention, the auxiliary carry device(16) comprises an auxiliary belt(16a) and an auxiliary belt roller(16b) with low coefficient of friction, and the auxiliary belt(16a) can comprise providing a roller with low coefficient of friction and carrying a substrate(15).

Also, in an embodiment of the present invention, for the auxiliary belt roller(16b), a roller with low coefficient of friction is applied, and if a roller has low coefficient of friction, the form and composition are not limited, and it is applied to a roller comprising bearings such as rolling bearing, oil bearing, ball bearing, roller bearing, sliding bearing, sleeve bearing, hydrodynamic journal bearing, hydrostatic bearing, pneumatic bearing, air dynamic bearing, air static bearing, and air bearing, and applied to a roller decreasing coefficient of friction by including materials such as plastic and emulsifier, and additives.

Below statement explains operation process of the electrospinning device according to the present invention references to FIG. 1 to FIG. 39.

First, going through a supply roller(3) provided in front-end of the electrospinning device(1) according to the present invention, a substrate(15) income and provided to a unit(10a) located in the uppermost end among each unit(10a, 10b, 10c, 10d) of the electrospinning device(1).

Onto the substrate(15) supplied to the unit(10a) of the electrospinning device(10a) through the supply roller(3), hot melt is spun by passing the hot melt unit(10a, 10c) among each unit (10a, 10b, 10c, 10d), and polymer spinning solution is electrospun by passing the spinning solution unit (10b, 10d) positioned on the rear part of the hot melt(10a, 10c).

In this case, through the supply roller(3), a substrate(15) income and provided to a unit(10a) of the electrospinning device(1) is located on a collector(13), high voltage of voltage generators (14a, 14b, 14c, 14d) is generated through a nozzle(12) on a collector(13), and hot melt and polymer spinning solution filled in a spinning solution main tank(8) in a substrate(15) on a collector(13) generating high voltage is electrospun in order through a nozzle(12) of a nozzle block (11).

Here, polymer spinning solution and hot melt filled in the spinning solution main tank(8) with high voltage through a metering pump(not shown) is consecutively and quantitatively provided to nozzle(12) of nozzle block (11a) having nozzle pipe(40) spinning hot melt and nozzle(12) of nozzle block (11b) having nozzle pipe(40) electrospinning polymer spinning solution, and the hot melt and polymer spinning solution provided to each of the nozzle (12) is electrospun and line-focused on a collector(13) flowing high voltage through a nozzle(14) and electrospun on a substrate(15), and a nanofiber web is laminate on the substrate(15).

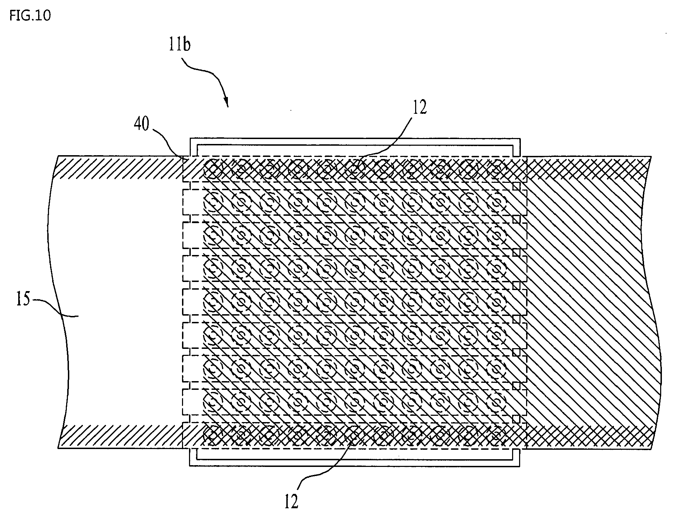

In this case, as described in FIG.9 and FIG. 10, hot melt is spun through each nozzle(12) of the nozzle pipe(40) which is arranged and installed only at both edge of the nozzle block (11a) installed in the hot melt unit(10a, 10c) of the electrospinning device(1) of the embodiment 1 of the present invention, and polymer spinning solution is electrospun through each nozzle (12) of a lot of nozzle pipe(40) which is arranged and installed in the nozzle block (11b) installed in the spining solution unit (10b, 10d) positioned on the rear part onto the substrate(15) having hot melt spun at the both edge for width direction by passing the hot melt unit(10a, 10c).

In other words, hot melt is spun from nozzle (12) of the nozzle pipe(40) which is arranged and installed in both edge of the nozzle block (11a) of the hot melt unit (10a) positioned on the front end among each unit(10a, 10b, 10c, 10d), and the transported substrate(15) with hot melt in both edge to width direction is provided to the spinning solution unit(10b) positioned on the rear part of the hot melt unit (10a). And the polymer spinning solution is electrospun on the substrate supplied to the spinning solution unit(10b) through each nozzle(12) of the multiple nozzle pipe(40) arranged and installed in nozzle block (11b). And as the substrate(15) which is carried with polymer spinning solution electrospun passes the hot melt unit (10c) spinning hot melt and the spinning solution unit (10d) electrospinning polymer spinning solution. The hot melt and polymer spinning solution is electrospun on the substrate, so nanofiber of nanofiber filter is manufactured.

Meanwhile, nozzle pipe (40) is provided in both edge and the center part of the nozzle block (11a) in hot melt unit(10a, 10c), and it is possible to spin hot melt to the both edge for width direction and centerpart of the substrate which transported from each nozzle(12) of the nozzle pipe(40).

As described above, by arranging and installing the nozzle pipe(40) at both edge and center part of the nozzle block (11a), adhesion between the substrate(15) and the nanofiber web laminated onto the substrate (15) can be improved, and the location and number of the nozzle(12) is not limited thereto.

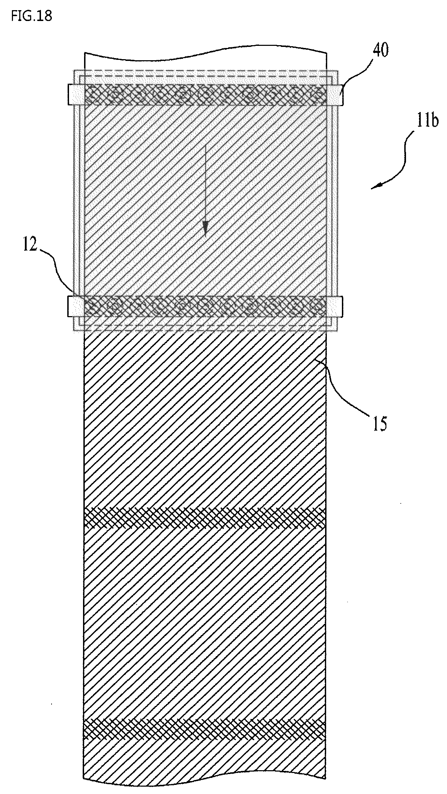

Meanwhile, as described in FIG. 17 and FIG. 18, when the hot melt is spun on the substrate (15) which is transported from nozzle(12) of nozzle pipe(40) arranged and installed at both edge of the nozzle block (11a) in hot melt unit(10a, 10c) of the electrospinning device(1) of the embodiment 2 of the present invention, the spinning speed and spinning time of the hot melt is controlled regularly or irregularly.

In other words, according to the feeding speed and the conveying speed of the substrate(15) supplied to the hot melt unit(10a, 10c), hot melt is spun as the main control device(7) regularly or irregularly controls the spinning speed and time of hot melt in the nozzle pipe (40) arranged and installed in both edge of the nozzle block (11a).

In case the conveying speed and feeding speed of substrate supplied to each unit (10a, 10b, 10c, 10d) is rapid, spinning quantity of hot melt is controlled by increasing spinning speed of hot melt, by decreasing spinning time of the hot melt, by decreasing the spinning speed of the substrate and by increasing the spinning time of the substrate. Also, spinning speed and spinning time of hot melt onto the transported substrate(15) is controlled for regular or irregular spinning.

So quantity of hot melt can be controlled according to the various conditions like polymer spinning solution, work environment and kinds of products, for example controlling spinning speed and time regularly for making the same spinning quantity of hot melt, or controlling spinning speed and time irregularly for making different quantity of hot melt.

As described above, by arranging and installing the nozzle pipe(40) at both edge of the nozzle block(11a), adhesion between the substrate(15) and the nanofiber web laminated on the substrate(15) can be improved.

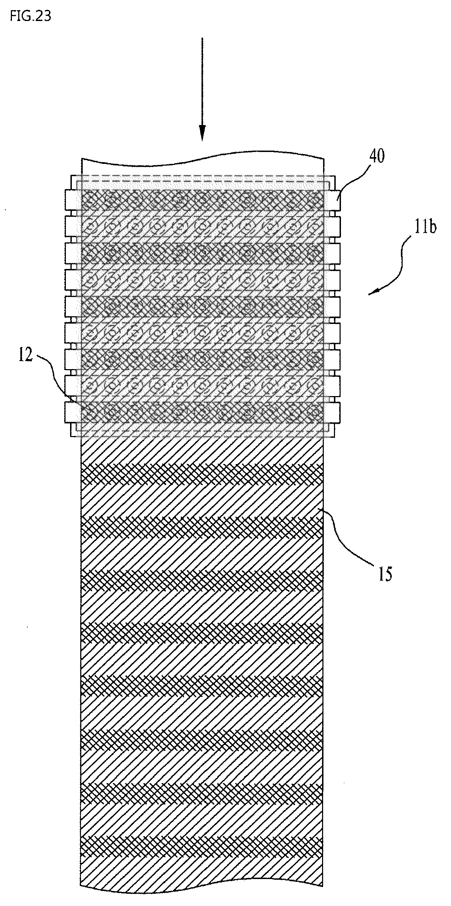

Meanwhile, as illustrated in FIG. 22 and FIG. 23, hot melt is spun through nozzle(12) of multiple nozzle pipe(40) which is spaced at regular intervals and arranged and installed in the nozzle block (11a) in hot melt unit(10a, 10c) of the electrospinning device(1) of the embodiment 3 of the present invention. By passing the hot melt unit(10a, 10c), hot melt is spun along transverse direction which cross at right angles to longitudinal direction of a substrate, and it is repeatedly spun in 5 spots on the substrate and spaced at regular intervals like interval between nozzle pipes, and the polymer spinning solution is electrospun onto the substrate(15) through each nozzle(12) of multiple nozzle pipe(40) arranged and installed in nozzle block (11b) in spinning solution unit(10b, 10d) positioned on the rear end.

That is, hot melt is spun from nozzle(12) of multiple nozzle pipe(40) arranged and installed with space at regular interval in nozzle block (11a) of the hot melt unit (10a) positioned on the front end among each unit(10a, 10b, 10c, 10d), and the hot melt is spun along transverse direction which cross at right angles to longitudinal direction, and repeatedly spun in 5 spots which is spaced at regular intervals like interval between nozzle pipes(40). And the substrate(15) is provided to the spinning solution unit(10b) positioned on the rear part of the hot melt unit (10a). Polymer spinning solution is electrospun on the substrate (15) supplied to the spinning solution unit (10b) through each nozzle(12) of multiple nozzle pipe(40) in nozzle block (11b). And as the substrate(15) which is carried with polymer spinning solution electrospun passes the hot melt unit (10c) spinning hot melt and the spinning solution unit(10d) electrospinning polymer spinning solution. The hot melt and polymer spinning solution is electrospun on the substrate, so nanofiber of nanofiber filter is manufactured.

Meanwhile, when the hot melt is spun on the substrate (15) which is transported from nozzle(12) of nozzle pipe(40) arranged and installed at both edge of the nozzle block (11a) in hot melt unit(10a, 10c), the spinning speed and spinning time of the hot melt is controlled regularly or irregularly.

In other words, according to the feeding speed and the conveying speed of the substrate (15) supplied to the hot melt unit(10a, 10c), hot melt is spun as the main control device(7) regularly or irregularly controls the spinning speed and time of hot melt in the nozzle pipe (40) arranged and installed in both edge of the nozzle block (11a).

In case the conveying speed and feeding speed of substrate supplied to each unit(10a, 10b, 10c, 10d) is rapid, spinning quantity of hot melt is controlled by increasing spinning speed of hot melt, by decreasing spinning time of the hot melt, by decreasing the spinning speed of the substrate and by increasing the spinning time of the substrate. Also, spinning speed and spinning time of hot melt onto the transported substrate(15) is controlled for regular or irregular spinning.

So quantity of hot melt can be controlled according to the various conditions like polymer spinning solution, work environment and kinds of products, for example controlling spinning speed and time regularly for making the same spinning quantity of hot melt, or controlling spinning speed and time irregularly for making different quantity of hot melt.

As described above, by arranging and installing the nozzle pipe(40) which is spaced at regular intervals in the nozzle block (11a), adhesion between the substrate(15) and the nanofiber web laminated on the substrate(15) can be improved.

In the embodiment 3 of the present invention, the nozzle pipe(40) is spaced at regular interval, but as described in FIG.21, it is possible to spin the hot melt on the substrate(15) with installing the nozzle pipe(40) at both edge and center part of the nozzle block(11a).

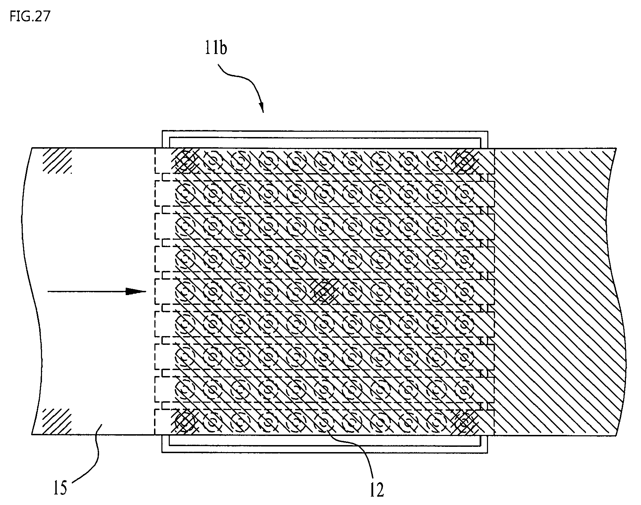

Meanwhile, as illustrated in FIG. 26 and 27, among nozzle (12) arranged and installed in the nozzle block(11a) in hot melt unit(10a, 10c) of the electrospinning device(1) of the embodiment 3 of the present invention, through nozzle(12) in particular area, hot melt is spun as Dot form. And by passing the hot melt unit(10a, 10c), polymer spinning solution is electrospun onto the substrate(15) having hot melt spun as Dot form through multiple nozzle(12) which arranged and installed in nozzle block (11b) in spinning solution unit(10b, 10d) positioned on the rear part.

That is, hot melt is spun as a Dot form from nozzle (12) of multiple nozzle pipe(40) arranged and installed in nozzle block (11a) of the hot melt unit (10a) positioned on the front end among each unit(10a, 10b, 10c, 10d), and the hot melt is spun at both edge and center part on the substrate(15). And the substrate(15) is provided to the spinning solution unit (10b) positioned on the rear part of the hot melt unit (10a). Polymer spinning solution is electrospun on the substrate(15) supplied to the spinning solution unit(10b) through each nozzle(12) of multiple nozzle pipe(40) in nozzle block (11b). And as the substrate(15) which is carried with polymer spinning solution electrospun passes the hot melt unit (10c) spinning hot melt and the spinning solution unit (10d) electrospinning polymer spinning solution. The hot melt and polymer spinning solution is electrospun on the substrate, so nanofiber of nanofiber filter is manufactured.

Meanwhile, among the valve(23) installed in supply pipe(21) which makes connection between spinning solution main tank(8) filled with hot melt and the nozzle(12) of the nozzle block (11a), by opening the valve(23) of supply pipe(21) connected to particular nozzle(12) spinning hot melt and by shutting the valve(23) of supply pipe(21) connected to particular nozzle(12) which is not spinning hot melt, hot melt is spun as Dot form through particular nozzle(12).

In this case, the number and arrangement of nozzle(12) of nozzle block(11a) arranged and installed in the hot melt unit (10a, 10c) is not the same as one of nozzle (12) of nozzle block (11b). And it is preferable to spin hot melt as Dot form only in particular area of transported substrate(15) by spinning hot melt from nozzle(12) installed in particular location of the nozzle block (11a) after arranging and installing nozzle(12) in particular area of the nozzle block (11a).

Here, it is preferable to change variously the location and number of the nozzle(12) installed in particular area of the nozzle block (11a).

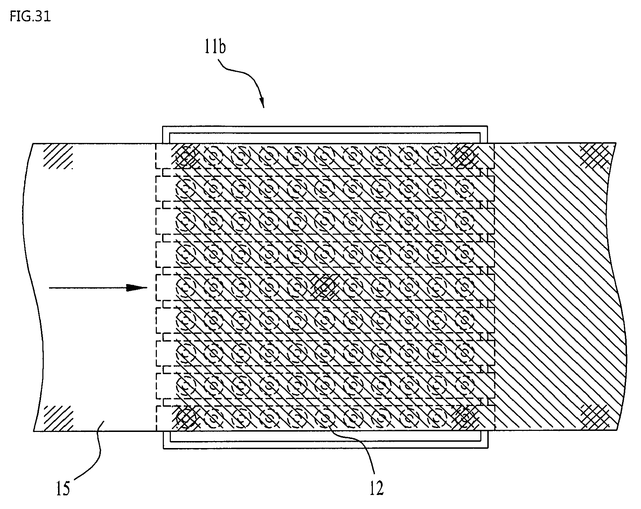

Meanwhile, as illustrated in FIG. 30 and 31, among nozzle (12) arranged and installed in the nozzle block (11a) in hot melt unit(10a, 10c) of the electrospinning device(1) of the embodiment 5 of the present invention, through nozzle(12) in particular area, hot melt is spun as Dot form. And by passing the hot melt unit(10a, 10c), polymer spinning solution is electrospun onto the substrate(15) having hot melt spun as Dot form through multiple nozzle(12) which arranged and installed in nozzle block (11b) in spinning solution unit(10b, 10d) positioned on the rear part.

In other words, hot melt is spun on the substrate(15) as Dot form from each edge and 5 nozzles (12) in center part arranged and installed in the nozzle block (11a) in hot melt unit (10a) positioned on the front end among each unit(10a, 10b, 10c, 10d). And the substrate (15) with hot melt spun at each edge and center part of nozzle block is provided to the spinning solution unit (10b) positioned on the rear part of the hot melt unit(10a). Polymer spinning solution is electrospun on the substrate(15) supplied to the spinning solution unit(10b) through each nozzle(12) of multiple nozzle pipe(40) in nozzle block (11b). And as the substrate(15) which is carried with polymer spinning solution electrospun passes the hot melt unit(10c) spinning hot melt and the spinning solution unit(10d) electrospinning polymer spinning solution. The hot melt and polymer spinning solution is electrospun on the substrate, so nanofiber of nanofiber filter is manufactured.

In the embodiment 5 of the present invention, the nozzle(12) is arranged and installed at each edge and center part of the nozzle block (11a), however the location and number of the nozzle(12) is not limited thereto.

As described above, by decreasing the number of nozzle(12) arranged and installed on the nozzle block (11a), the composition of the nozzle block (11a) can be simplified and the cost for the device can be reduced.

Meanwhile, in the embodiment 5 of the present invention, nozzle(12) is arranged and installed in each edge and center part of the nozzle block (11a) in hot melt unit(10a, 10c) spinning hot melt, however it is possible to spin hot melt only in particular area of the transported substrate(15) as Dot form only from the nozzle(12) located in particular area among the nozzles (12) when the nozzles (12) are arranged and installed whole nozzle block (11a). In this case, each nozzle(12) of the nozzle block (11a) and spinning solution main tank(8) filled with hot melt is connected by supply pipe(not shown) and the valve(not shown) which opens and shuts the supply pipe. It is preferable to spin hot melt onto particular area of transported substrate through nozzle in particular area by controlling the valve to open particular supply pipe and by supplying hot melt only to the nozzle(12) in particular area.

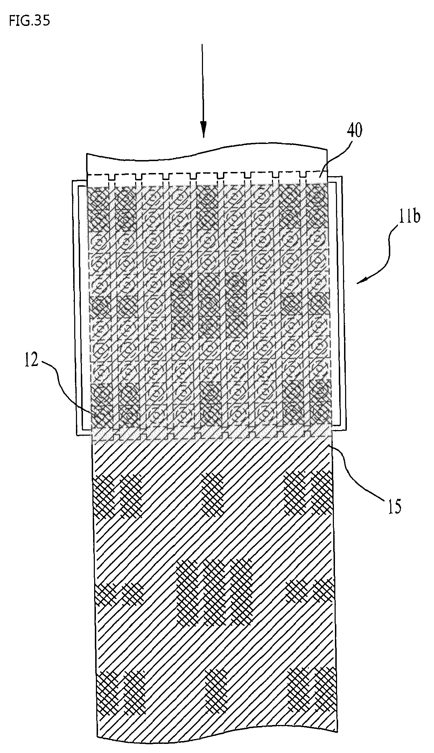

Meanwhile, as illustrated in FIG. 34 and 35, among the nozzle pipe(40) arranged and installed in nozzle block (11a) in hot melt unit(10a, 10c) of the electrospinning device(1) of the embodiment 6 of the present invention and the nozzle(12) installed in the nozzle pipe (40), hot melt is spun on the substrate(15) in particular form and area through particular nozzle pipe(40) and nozzle(12). And by passing the hot melt unit(10a, 10c), polymer spinning solution is electrospun through multiple nozzles(12) arranged and installed in nozzle block (11b) in the spinning solution unit(10b, 10d) onto the substrate with hot melt spun in particular form and area.

In other words, hot melt is spun on the substrate (15) through particular nozzle(12) and nozzle pipe(40) among multiple nozzles(12) of the nozzle pipe(40) and the multiple nozzle pipe(40) installed in nozzle block (11a) in hot melt unit (10a) positioned on the front end among each unit(10a, 10b, 10c, 10d). And the substrate(15) with hot melt spun in particular area and segmental form is provided to the spinning solution unit(10b) positioned on the rear part of the hot melt unit(10a). Polymer spinning solution is electrospun on the substrate(15) supplied to the spinning solution unit(10b) through each nozzle(12) of multiple nozzle pipe(40) in nozzle block (11b). And as the substrate(15) which is carried with polymer spinning solution electrospun passes the hot melt unit (10c) spinning hot melt and the spinning solution unit (10d) electrospinning polymer spinning solution. The hot melt and polymer spinning solution is electrospun on the substrate, so nanofiber of nanofiber filter is manufactured.

According to the structure as mentioned above, hot melt is supplied only to particular nozzle pipe(40) by controlling open and shut of valve of nozzle pipe(40) connected to spinning solution main tank(8) through supply pipe(21), wherein the particular nozzle pipe(40) is arranged and installed in the nozzle block (11a) in the hot melt unit(10a, 10c). And by providing hot melt to the particular nozzle (12) by controlling open and shut of the each valve connected to the multiple supply pipe(25), which is connected to the opened nozzle pipe(40), hot melt is spun only in particular area and part of the substrate(15).

In other words, among each valve(23) installed in the supply pipe(21) that make connection between the spinning solution main tank(8) filled with hot melt and the nozzle pipe (40) arranged and installed in the nozzle block (11a), the valve(27) of the supply pipe(25) connected to particular nozzle pipe(40) and nozzle(12) for spinning hot melt is opened, and the valve(23,27) of the supply pipe(21, 25) connected to other nozzle pipe (40) and nozzle (12) which do not spin the hot melt is shut. By doing so, through particular nozzle(12), hot melt is spun only in particular area and part.

Meanwhile, as illustrated in FIG.38 to FIG. 39, hot melt is spun as segmental form through nozzle(12) arranged and installed in particular area of the nozzle block(11a) in hot melt unit(10a, 10c) of the electrospinning device(1) of the embodiment 7 of the present invention. And by passing the hot melt unit(10a, 10c), polymer spinning solution is electrospun through multiple nozzles(12) arranged and installed in the nozzle block (11b) installed in the spinning solution unit(10b, 10d) positioned on the rear end onto the substrate which is spun of hot melt in particular area and part.

In other words, the hot melt is spun as segmental form through nozzle(12) arranged and installed in particular area of nozzle block (11a) in hot melt unit(10a) positioned on the front end among each unit (10a, 10b, 10c, 10d). And polymer spinning solution is electrospun onto the substrate(15) supplied to the spinning solution unit (10b) through each nozzle(12) of nozzle pipe(40) arranged and installed in nozzle block(10b). And the polymer spinning solution is electrospun onto the lower layer of the substrate(15), and the substrate is carried to the hot melt unit (10c) spinning hot melt and to the spinning solution unit(10d) electrospinning polymer spinning solution. By doing so, hot melt and polymer spinning solution is electrospun onto the substrate, and nanofiber or nanofiber filter is manufactured.

According to the structure as describe above, after hot melt which is spun from nozzle(12) arranged and installed in particular area or part of nozzle block (11a) in the hot melt unit(10a, 10c) is spun only in the particular area, polymer spinning solution is electrospun on the whole substrate through nozzle(12) of nozzle pipe(40) arranged and installed in nozzle block (11b) in the spinning solution unit (10b, 10d). By doing so, usage of hot melt can be decreased and the interference of hot melt to the polymer spinning solution can be also minimized.

Here, each spinning solution main tank(8) connected to each unit(10a, 10b, 10c, 10d) is filled with hot melt or polymer spinning solution, wherein the spinning solution main tank(8) filled with hot melt is connected to the hot melt unit(10a, 10c), and the spinning solution main tank(8) filled with polymer spinning solution is connected to the spinning solution unit(10b, 10d).

As described above, a substrate(15) income and provided to a unit (10a) located in the front-end among each unit(10a, 10b, 10c, 10d) is carried to a unit(10b) located in the rear-end by an auxiliary belt roller(16b) of an auxiliary carry device(16) operated by driving of a motor(not shown) and an auxiliary belt(16a) driving by rotation of the auxiliary belt roller(16b), a substrate(15) is carried to the unit (10b) positioned on the rear part by operation of an auxiliary carry device(16) provided in each unit(10a, 10b, 10c, 10d), and the same kind of polymer spinning solution and hot melt is each electrospun on a substrate(15) inflow and provided from each unit(10a, 10b, 10c, 10d), or different kind of polymer spinning solution and hot melt is each electrospun, and the process described above is repeated, laminating formed a nanofiber web on a substrate(15), and produces nanofiber or nanofiber filter.

Here, by an overflow device(200) provided in the electrospinning device(1), polymer spinning solution and hot melt overflowed from a nozzle block (11) are retrieved through a spinning solution recovery path(250) provided in bottom of a nozzle block (11), and retrieved polymer spinning solution and hot melt are again reused and recycled.

In addition, by a VOC recycling device(300) provided in the electrospinning device(1), VOC occurred when spinning polymer spinning solution and hot melt through a nozzle(12) in each unit(10a, 10b, 10c, 10d) are recycled and reused.

In other words, VOC in evaporation state occurred when spinning polymer spinning solution or hot melt on a substrate through a nozzle (12) in each of the unit(10a, 10b, 10c, 10d) is discharged to a condensation device(310) through pipes(311, 331), and VOC in evaporation state discharged to a condensation device(310) is condensed and changed in liquefaction state, stored to a solvent storage device(330), and VOC stored in the solvent storage device(330) is recycled and reused.

As described above, VOC in evaporation state which is generated in each unit(10a, 10b, 10c, 10d) of the electrospinning device(1) is cooled and condensed in a condensation device(310) by cooling methods such as water cooling, air cooling, and evaporative method, and changed in liquefaction state, liquefies VOC in liquefaction state condensed through a condensation device(310), the VOC in liquefaction is carried to a distillation device(320) and is distilled, and VOC in liquefaction state is carried to the distillation device(320) and is evaporated in order according to difference in the boiling point by heat of high temperature, and evaporated VOC is separated and classified according to solvent type and it is liquefied and discharged.

In this case, VOC in liquefaction state distilled through the distillation device(320) evaporates in order from solvent of low boiling point to solvent of high boiling point. In other words, VOC in liquefaction state evaporates in order of lower boiling point, and evaporated and liquefied VOC is discharged from a pipe provided in upper direction of a distillation device(320) to pipes(311, 321, 331) provided in lower direction, and provided to each solvent storage device(330).

As described above, VOC comprising several types of mixed solvent is classified to each solvent type and discharged, and stored to each solvent storage device(330), and solvent stored in a solvent storage device(330) classified according to each of the solvent type is reused and recycled by adding solvent in polymer spinning solution or hot melt.

Also, a substrate(15) spun hot melt through the hot melt unit(10a, 10c) positioned in the front end of the the electrospinning device(1), and electrospun polymer spinning solution through spinning solution unit(10b, 10d) of the electrospinning device (1) and laminating formed a nanofiber web goes through a thickness measuring device(70) located in the rear-end of each unit(10b, 10d), and when going through the thickness measuring device(70), projecting ultrasonic wave, longitudinal wave, and transverse wave from the thickness measuring device(70), each ultrasonic signal of longitudinal wave and transverse wave reciprocating motion time on a substrate(15), in other words, each propagation time of longitudinal wave and transverse wave is measured.

Moreover, from a desired formula propagation using time of measured longitudinal wave and transverse wave, propagation speed of longitudinal wave and transverse wave from reference temperature of a substrate(15) laminating formed a nanofiber web, and constant temperature of propagation speed of longitudinal wave and propagation speed, calculating thickness of a nanofiber web, and thickness of a nanofiber web laminating formed on a substrate(15) is measured.

Here, when measuring thickness of a nanofiber web laminating formed on a substrate(15) going through each unit (10b, 10d) through the thickness measuring device(70), in the case of thickness of the nanofiber web is thinner than reference value, feed speed of the other units (10b, 10d) is decreased, or by adjusting voltage intensity of voltage generators (14b, 14d), increasing discharging amount per unit of polymer spinning solution spun from a nozzle block (11b), thickness of a nanofiber web is formed thick.

In addition, when measuring thickness of a nanofiber web laminating formed on a substrate(15) going through each unit(10b, 10d) through the thickness measuring device(70), in the case of thickness of the nanofiber web is measured thicker than reference value, feed speed of the other units(10b, 10d) is increased, by adjusting voltage intensity of voltage generators (14b, 14d), decreasing discharging amount per unit of polymer spinning solution spun from a nozzle block (11b), and thickness of a nanofiber web is formed thin.

Here, in the case of feed speed of a substrate (15) going through the thickness measuring device(70) is fast or slow, the substrate feed speed adjusting device(30) adjusts speed of a substrate(15) carried through an auxiliary carry device(16).

In other words, in the case of a sensing sensor installed in the electrospinning device(1) sensed feed speed of a substrate (15a) in the hot melt units(10a, 10c) located in the front-end among each unit(10a, 10b, 10c, 10d) is faster than feed speed of a substrate(15b) in spinning solution units(10b, 10d) located in the rear-end, as illustrated in FIG. 11 to FIG. 12, a substrate(15a) carried from hot melt units(10a, 10c) located in the front-end is provided between the pair of support roller(33, 33') for preventing sagging, an adjusting roller(35) winding a substrate(15) is moved to lower side, among substrate(15) carried from hot melt units(10a, 10c) located in the front-end to spinning solution units (10b, 10d) located in the rear-end, pulling a substrate(15a) carried to outer side of hot melt units(10a, 10c) located in the front-end and excessively carried to a buffer section (31) located between hot melt unit(10a, 10c) and spinning solution unit(10b, 10d), feed speed of a substrate (15a) in hot melt units(10a, 10c) located in the front-end and feed speed of a substrate(15b) in spinning solution units (10b, 10d) located in the rear-end are corrected and controlled as the same, and preventing sagging and wrinkle of a substrate(15a).

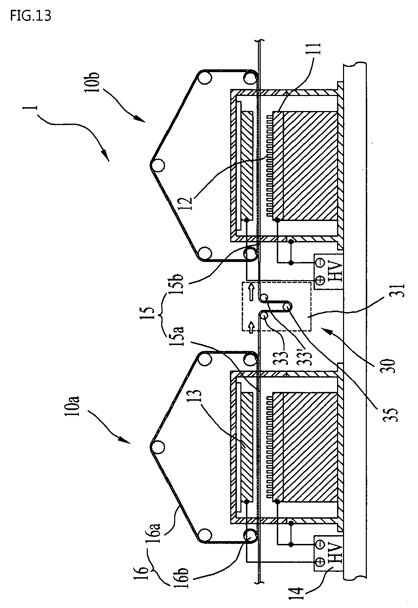

Meanwhile, in the case of the sensing sensor installed in the electrospinning device(1) sensed feed speed of a substrate(15a) in hot melt units(10a, 10c) located in the front-end among each unit(10a, 10b, 10c, 10d) is slower than feed speed of a substrate(15b) in spinning solution units (10b, 10d) located in the rear-end, as illustrated in FIG. 13 to FIG. 14, a substrate(15b) carried from spinning solution units(10b, 10d) is provided between the pair of support roller(33, 33') for preventing sagging, an adjusting roller(35) winding a substrate(15) is moved to upper side, among substrate(15) carried from hot melt units(10a, 10c) to spinning solution units (10b, 10d), quickly providing a substrate(15a) winding by an adjusting roller(35) in buffer section (31) located between hot melt unit(10a, 10c) and spinning solution unit(10b, 10d), feed speed of a substrate(15a) in hot melt units(10a, 10c) and feed speed of a substrate(15b) in spinning solution units(10b, 10d) are corrected and controlled as the same, and preventing snapping of a substrate(15b).

According to the structure as described above, by adjusting feed speed of a substrate(15b) carried to spinning solution units(10b, 10d) among each of the unit(10a, 10b, 10c, 10d), feed speed of a substrate(15b) in spinning solution units(10b, 10d) among each of the unit(10a, 10b, 10c, 10d) and feed speed of a substrate(15a) in hot melt units(10a, 10c) are the same.

As described above, a substrate(15), which goes through each unit(10a, 10b, 10c, 10d) of the electrospinning device(1) and polymer spinning solution and hot melt are electrospun and laminating formed a nanofiber web on top and bottom, performs post-process such as laminating through a laminating device(90), and produces the final product.

Meanwhile, a substrate(15) laminated through the laminating device(90) measures permeability through the permeability measuring device(80), through the unit(10a, 10c) positioned on the front end among each unit(10a, 10b, 10c, 10d), hot melt is spun and through the unit(10b, 10d) positioned on the rear end, polymer spinning solution is electrospun on the substrate(15), and measures permeability of a nanofiber web electrospun polymer spinning solution and laminating formed a nanofiber web, and according to measuring value, feed speed of the substrate(15) and a nozzle block (11) are controlled, and permeability of a nanofiber web is adjusted.

In other words, in the case of permeability of nanofiber web laminating formed on a substrate(15) through each unit (10b, 10d), feed speed of the unit (10b, 10d) is decreased, by adjusting voltage intensity of voltage generators (14b, 14d), increasing discharging amount per unit of a nozzle block (11), increasing laminating amount of polymer spinning solution on the substrate(15), and forms small permeability. Also, in the case of permeability of nanofiber web laminating formed on a substrate(15) through each unit (10b, 10d) is measured small, feed speed of the unit (10b, 10d) is increased, by adjusting voltage intensity of voltage generators (14b, 14d), decreasing discharging amount per unit of a nozzle block(11), decreasing laminating amount of polymer spinning solution on the substrate(15), and forms large permeability.

As described above, after measuring permeability of a nanofiber web laminating formed on the substrate(15), by controlling feed speed of each unit (10b, 10d) according to measured permeability and a nozzle block(11), a nanofiber web having even permeability can be produced.

In the present invention, the electrospinning device(1) comprises a bottom-up electrospinning device, four units(10a, 10b, 10c, 10d) are consecutively provided, and in the rear-end of each unit(10a, 10b, 10c, 10d), a thickness measuring device(70) and a substrate feed speed adjusting device(30) are each provided, and in the rear-end of each unit(10a, 10b, 10c, 10d), a laminating device(90) and a permeability measuring device(80) are provided. However, the electrospinning device(1) can comprise a bottom-up electrospinning device, and number of units (10a, 10b, 10c, 10d) can comprise four or more or four or less, and between the unit (10a, 10b, 10c, 10d) and in the rear-end, a thickness measuring device(70), a substrate feed speed adjusting device(30), a flip device(110), a laminating device(90), and a permeability measuring device(80) are preferably provided any one or more.

In addition, in an embodiment of the present invention, the overflow device(200) and the VOC recycling device(300) are simultaneously provided in the electrospinning device(1), and the overflow device(200) and the VOC recycling device can be individually provided.

While this invention has been described in connection with what is presently considered to be practical exemplary embodiments, it is to be understood that the invention is not limited to the disclosed embodiments, on the contrary, is intended to cover carious modifications and equivalent arrangements included within the spirit and scope of the appended claims.

## Claims

1. An electrospinning device for production of nanofibers, comprising:
a hot melt unit containing a spinning solution main tank which is provided one or more and consecutively installed and filled hot melt; and a nozzle block which is installed inside of a case for jetting hot melt filled in the spinning solution main tank;
a spinning solution unit containing a spinning solution main tank which is provided one or more and consecutively installed and filled polymer spinning solution; a nozzle block which is installed inside of a case for jetting polymer spinning solution filled in the spinning solution main tank on the substrate from outside and arranged and installed a plurality of nozzle in pin form for longitudinal direction; and
a collector separated in predetermined space from a nozzle for integrating polymer spinning solution jetted from nozzle of the nozzle block and installed in each unit;
a voltage generator generating voltage to the collector; and a unit comprising an auxiliary carry device for carrying a substrate; and
wherein the hot melt unit and the spinning solution unit are provided at least one or more, and installed alternatively.

2. The electrospinning device for production of nanofibers of claim 1, further comprising: an overflow device including a spinning solution recovery path for retrieving overflowed polymer spinning solution from a nozzle block of each of the unit, a recycled tank connected to the spinning solution recovery path and stores retrieved polymer spinning solution, and a middle tank connected to the recycled tank and a spinning solution main tank with a feed pipe and carrying polymer spinning solution; and
wherein the overflow device provides polymer spinning solution from the middle tank to a nozzle block through a supply pipe.

3. The electrospinning device for production of nanofibers of claim 1, further comprising: a VOC recycling device including a condensation device for condensing and liquefying VOC generated from each of the unit, a distillation device which distills and liquefies VOC condensed and liquefied through the condensation device, a storage device for storing solvent liquefied from a distillation device; and
wherein the VOC recycling device provides for reusing and recycling solvent in a storage tank which classifies and stores VOC liquefied and distilled from a distillation device as polymer spinning solution.

4. The electrospinning device for production of nanofibers of claim 1, wherein top of the case is formed with an electric insulator and the bottom is formed with electric conductor, and top and bottom of the case are mutually combined.

5. The electrospinning device for production of nanofibers of claim 1, further comprising: a thickness measuring device which is installed in the rear-end of each of the unit, measures thickness of nanofiber web jetted on a substrate carried by ultrasonic waves, adjusts feed speed of a substrate and voltage intensity of a voltage generator according to thickness of measured nanofiber web, and adjusts thickness of nanofiber web.

6. The electrospinning device for production of nanofibers of claim 1, further comprising: a permeability measuring device which is provided in the rear end among each unit, measures permeability of nanofiber web jetted on a substrate by ultrasonic waves, adjusts feed speed of a substrate and voltage intensity of a voltage generator according to permeability of measured nanofiber web, and adjusts permeability of nanofiber web.

7. The electrospinning device for production of nanofibers of claim 1, further comprising: a substrate feed speed adjusting device including a buffer section formed between the hot melt unit and the spinning solution unit, a pair of support roller supporting a substrate on the buffer section, and one or more adjusting roller which wound a substrate and installed movable up and down between a pair of the support roller; and
wherein the substrate feed speed adjusting device which adjusts feed speed of a substrate according to vertical motion of each of the adjusting roller.

8. The electrospinning device for production of nanofibers of claim 1, further comprising: a temperature adjusting control device which is formed in spiral form to inner peripheral edge of each nozzle pipe of the nozzle block, formed in heating line form, and adjusts temperature of polymer spinning solution provided to a nozzle pipe.

9. The electrospinning device for production of nanofibers of claim 1, wherein the nozzle pipe having a plurality of nozzle in pin form for longitudinal direction is installed in the hot melt unit, the nozzle pipe is installed at both edge of the nozzle block, and hot melt is spun only at both edge to the width direction of transported substrate.

10. The electrospinning device for production of nanofibers of claim 9, wherein from the nozzle in nozzle pipe in the hot melt unit, hot melt is spun, and the substrate spun of hot melt is provided to the spinning solution unit, and by electrospinning polymer spinning solution from the nozzle in nozzle pipe of the spinning solution unit, the process for laminating and forming nanofiber is alternatively repeated.

11. The electrospinning device for production of nanofibers of claim 1, wherein the nozzle pipe having a plurality of nozzle in pin form for longitudinal direction is installed in the nozzle block in the hot melt unit, and hot melt is spun along transverse direction which cross at right angles to longitudinal direction of a substrate, and hot melt is repeatedly spun on the particular area of the substrate which is spaced at regular intervals like interval between nozzle pipes.

12. The electrospinning device for production of nanofibers of claim 1, wherein the nozzle pipe having a plurality of nozzle in pin form and for longitudinal direction is installed with space at regular interval in the nozzle block in the hot melt unit, the hot melt from a plurality of nozzle pipe which is spaced at regular intervals to the nozzle block is spun along transverse direction which cross at right angles to longitudinal direction of a substrate, and hot melt is repeatedly spun on the particular area of the substrate which is spaced at regular intervals like interval between nozzle pipes.

13. The electrospinning device for production of nanofibers of claim 1, wherein a plurality of nozzle individually controlled in pin form in nozzle block in hot melt unit is arranged and installed, and a supply pipe is connected and installed to the each nozzle arranged and installed in the nozzle block for providing hot melt from spinning solution main tank, and each supply pipe is equipped with valve, and the valve is individually controlled for open and shut.

14. The electrospinning device for production of nanofibers of claim 1, wherein the nozzle in pin form in nozzle block in the hot melt unit is arranged and installed in particular area, and the nozzle is installed in each edge and the center part of the nozzle block, and the hot melt is spun in particular area of the substrate.

15. The electrospinning device for production of nanofibers of claim 13 or 14, hot melt is spun on the substrate in Dot form from the nozzle arranged and installed in nozzle block in hot melt unit, and the substrate having hot melt in Dot form is provided to the spinning solution unit positioned on the rear end, and polymer spinning solution is electrospun on the substrate from a plurality of nozzle arranged and installed in the nozzle block in spinning solution unit, and nanofiber web is laminated and formed on the substrate, and the process is alternatively repeated.

16. The electrospinning device for production of nanofibers of claim 1, wherein a plurality of nozzle pipes are individually controlled and installed in the nozzle block in the hot melt unit, a plurality of nozzle in pin form in the nozzle pipe along the longitudinal direction are individually controlled, and the supply pipe is connected and installed to the nozzle pipe arranged and installed in the nozzle block for supplying hot melt in the spinning solution main tank, and the valve of the supply pipe is individually controlled to open and shut, and a plurality of supply pipes connected to each nozzle are equipped with the valve to individually control the open and shut and operate open and shut of the valve.

17. The electrospinning device for production of nanofibers of claim 16, wherein among each nozzle installed in nozzle pipe or each nozzle pipe installed in nozzle block in the hot melt unit, hot melt is spun from particular nozzle, and the hot melt is spun in particular area or part of the substrate, and the substrate is provided to the spinning solution unit positioned on the rear end, and from each nozzle arranged and installed in the nozzle block in the spinning solution unit, polymer spinning solution is electrospun, and nanofiber web is laminated and formed onto the substrate, and the process is alternatively repeated.

18. The electrospinning device for production of nanofibers of claim 1, wherein the nozzle in pin form in nozzle block in the hot melt unit is arranged and installed in particular area as segmental form, and the nozzle is installed in each edge and particular area of the nozzle block, and hot melt is spun on each edge and the center part of the transported substrate.

19. The electrospinning device for production of nanofibers of claim 18, wherein from the nozzle arranged and installed in particular area as segmental form, hot melt is spun in particular area and in segmental form on the substrate, and the substrate is provided to the spinning solution unit positioned on the rear end, and polymer spinning solution is electrospun on the substrate from each nozzle of nozzle pipe arranged and installed in the nozzle block in the spinning solution unit, and nanofiber web is laminated and formed on the substrate, and the process is alternatively repeated.
